# EUROPEAN PATENT SPECIFICATION

(11) **EP 2 796 393 B1**
(45) Date of publication and mention of the grant of the patent: **12.08.2020**
(21) Application number: 14164884.0
(22) Date of filing: 16.04.2014
(51) Int. Cl.: B65G 47/24

(54) **Article supply apparatus**
Artikelbereitstellungsvorrichtung
Appareil de distribution d'articles

(30) Priority: 19.04.2013 JP 2013087948; 05.03.2014 JP 2014043005
(43) Date of publication of application: 29.10.2014
(73) Proprietor: KAO CORPORATION, Tokyo 103-8210 (JP)
(72) Inventor: Fukuda, Tsutomu, Kanagawa (JP); Okazaki, Toshiki, Kanagawa (JP); Hatano, Koichi, Kanagawa (JP)
(74) Representative: Hoffmann Eitle

(56) References cited:
- WO-A1-2014/064593
- FR-A1- 2 725 704
- JP-A- 2000 185 815
- US-A- 4 530 430
- US-A1- 2004 011 623
- US-A1- 2007 068 772

## Description

### [Field of the Invention]

The present invention relates to an article supply apparatus that supplies an article such as a long shaped container in a uniform posture.

### [Related Art]

As containers used to charge a shampoo, a rinse, a home cleanser, a food, and the like thereinto, various containers having different sizes and shapes exist in order to exhibit high performance in use in response to the amount of the content set for a user and to ensure a beautiful appearance thereof. In a production facility, a conveying member called a holder having an inner dimension and a shape matching the shape of the container and having an outer shape in uniform is used, and hence handling these various containers to produce products is available. In such a production facility, it is difficult to automatically put these various containers having different sizes or shapes into the conveying members, and hence that is manually performed in many cases. Inserting such containers to the conveying members is sometimes available by using an automatic machine of high versatility, but there are limitations on the size and the shape of the container to be handled. There is the same situation on the case where the container is put into a conveying device such as a belt conveyor directory without using the holder. Further, regarding caps attached to the containers, various caps having different sizes or shapes exist in consideration of the function or the design. About the production facility, the caps are manually supplied to the conveying members, the conveying device, or the containers in many cases as in the containers.

In recent years, because of progressing a lower price for a robot or the like capable of arbitrarily performing an accurate positioning operation and the flexibility of their motion pattern handling various articles having different sizes or shapes may be performed at a low cost. In an article handling operation, that is conventionally done by a machine having a motion pattern within a certain range, especially in that called a picking and placing operation in which the article is picked up and is placed in a desired direction after the article is moved to a predetermined position, a multi-axis robot or the like is used frequently. That is, when the multi-axis robot or the like is used, various containers having different sizes and shapes may be easily picked and placed to be supplied to the conveying members.

Conventionally, Japanese Patent Application Publication No. 7-144747 (Prior Art1) discloses a container supply apparatus that supplies a container having an opening portion at one end of the longitudinal direction and a bottom portion at the other end thereof by a robot. The container supply apparatus of the prior art includes a conveying device that conveys containers in the entire width of a wide belt conveyor in a distributed state while the containers are laterally fallen, an image processing device that recognizes the laterally fallen state of the containers conveyed on the belt conveyor, and a robot that picks up (grips and picks up) the container by adsorbing an outer peripheral portion slightly deviated to the bottom of the container in relation to the middle portion thereof in the longitudinal direction of the container recognized by the image processing device on the belt conveyor. Then, the robot moves the container adsorbed thereto to a release position, places (moves and put) the container so that an opening portion thereof faces an engagement member, and rotates the container so that the opening portion of the container faces the upside and the container normally stands.

### [Prior Art 1] Japanese Patent Application Publication No. 7-144747

A further document is US 4,530,430 A1, which refers to a device for transferring shaped articles from a first to a second belt by uniform orientation arrangement on the letter. When a bottle arrives at the proximity to the device according to the invention and stops against a fixed stop, it acts upon a sensor (for example a micro switch or a photocell) that establishes the orientation for the bottle and determines the direction in which it should be rotatable for being laid onto the belt.

### [Summary of the Invention]

### [Problems to be Solved by the Invention]

In the container supply apparatus disclosed in the Prior Art 1, the containers are distributed in the entire width of the belt conveyor, and hence the operation range necessary for the robot that picks up the containers on the belt conveyor is wide. Accordingly, the robot size is increase and a large installation area is needed for the robot. Further, when the movement area of the robot becomes wide, the distance between picking and placing of the robot becomes longer, and as a result, the robot operation time increases to prevent the ability thereof be increased. WO 2014/064593 discloses an article supply apparatus with a picking and placing device that picks up an article as a long shaped container at a picking position and places the article at a placing position in a uniform posture, the article supply apparatus comprising:a conveying device configured to place the article provided from an article providing device onto a conveying surface and to convey the article to the picking position,finding means configured to find the orientation of article before the article is picked up at the picking position,wherein the picking and placing device picks up and places the article according to the found result of the finding means to place the article at the placing position in a uniform standing posture.

US 4,530,430 discloses an article supply apparatus with a picking and placing device that picks up an article as a long shaped container at a picking position and places the article at a placing position in a uniform posture, the article supply apparatus comprising:a conveying device configured to place the article provided from an article providing device onto a conveying surface and to convey the article to the picking position,a stopping device formed as a normally-closed stopper and configured to stop the article while contacting the article at the picking position on the conveying surface,finding means configured to find the longitudinal direction of the stopped article before the article is picked up at the picking position,wherein the picking and placing device picks up and places the article according to the found result of the finding means to place the stopped article at the placing position in a uniform posture.

An object of the present invention is to provide an article supply apparatus capable of narrowing a movement area of a picking and placing device such as a robot that picks up and places an article.

### [Means for Solving the Problems]

The present invention relates to an article supply apparatus with the features of claim 1.

In the present invention, the "long shaped" indicates a shape in which the article height (the article length) is long relative to the article width, that is, a shape with the longitudinal direction. In a case of the container, the "uniform posture" indicates a posture in which the opening portion of the container faces the upside or a posture in which the bottom portion of the container faces the downside. In a case of the cap, the "uniform posture" indicates a posture in which the upper side (the ceiling surface side) of the cap faces the upside or a posture in which the lower side (the container attachment side) of the cap faces the downside.

### [Effect of the Invention]

According to the present invention, in a case when the long shaped article is picked up at the picking position and is placed at the placing position in a uniform posture by the picking and placing device such as an automatic machine or a robot, the article is placed onto the V-shaped conveying surface of the conveying device to be conveyed to the picking position in a direction in which the long shaped direction thereof follows the V-shaped valley of the V-shaped conveying surface. Accordingly, the picking and placing device is enough to sequentially pick the articles they are on the narrow area of the V-shaped valley of the V-shaped conveying surface of the conveying device in one order. Accordingly, the movement range of the picking and placing device may be narrowed.

### [BRIEF DESCRIPTION OF DRAWINGS]

FIG. 1 is a perspective view illustrating an article supply apparatus;
FIG. 2 is a perspective view illustrating an article carrying step;
FIG. 3 is a perspective view illustrating an article picking step;
FIG. 4 is a perspective view illustrating an article placing step;
FIG. 5 is a schematic view illustrating an article supply apparatus;
FIGS. 6A to 6C are schematic views illustrating top and bottom finding means for an article;
FIGS. 7A and 7B are schematic views illustrating a conveying device;
FIGS. 8A and 8B are schematic views illustrating another example of the conveying device;
FIG. 9 is a schematic view illustrating an upstream-side conveying device and a downstream-side conveying device;
FIGS. 10A and 10B are schematic views illustrating the downstream-side conveying device;
FIGS. 11A and 11B are schematic views illustrating the upstream conveying device;
FIG. 12 is a schematic view illustrating various shapes of containers as long shaped articles;
FIG. 13 is a schematic view illustrating a state where a columnar container is conveyed;
FIGS. 14A to 14C are schematic views illustrating a state where a conical container is conveyed;
FIGS. 15A to 15C are schematic views illustrating a state where an oval container is conveyed;
FIGS. 16A and 16B are schematic views illustrating a state where the oval container is conveyed;
FIG. 17 is a schematic view illustrating various shapes of caps as long shaped articles;
FIG. 18 is a schematic view illustrating various shapes of caps as long shaped articles;
FIG. 19 is a schematic view illustrating various shapes of caps as long shaped articles;
FIGS. 20A to 20C are schematic views illustrating another example of the top and bottom finding means for the articled
FIGS. 21A to 21C are schematic views illustrating still another example of the top and bottom finding means for the article;
FIG. 22 is a schematic view illustrating another example of the article supply apparatus; and
FIG. 23 is a schematic view illustrating still another example of the article supply apparatus.

### [DETAILED DESCRIPTION]

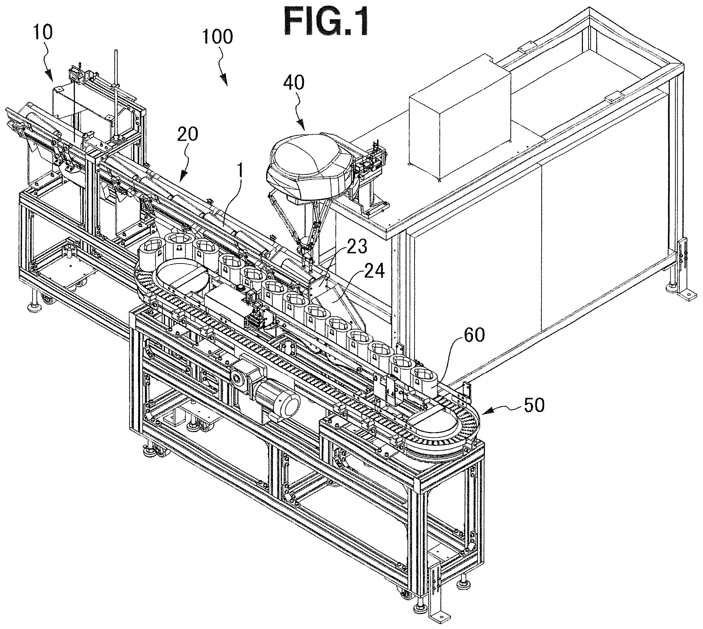

An article supply apparatus 100 illustrated in FIG. 1 to 5 includes an article providing device 10, a conveying device 20, finding means 30, a robot 40 as a picking and placing device, and a holder conveying device 50. The article supply apparatus 100 conveys a container 1 (or a cap 2) as a long shaped article provided by the article providing device 10 to a picking position using the conveying device 20, the robot 40 picks up the container 1 of which the longitudinal direction is found by the finding means 30 and places the container into a holder 60 located at a placing position on the holder conveying device 50 in a uniform posture. Hereinafter, the article providing device 10, the conveying device 20, the finding means 30, the robot 40, and the holder conveying device 50 will be described.

Furthermore, to find the longitudinal direction of the article in the present specification is to find whether each of one end and the other end in the long shaped direction (the longitudinal direction) of the article is located in any one of the forward direction and the backward direction following the conveying direction on the conveying device 20. For example, when the article is a container and is conveyed in a posture of an opening portion thereof is located at a leading position, the finding means finds that the opening portion (one end) is located in the forward direction and a bottom portion (the other end) is located in the backward direction.

### (Article Providing Device 10)

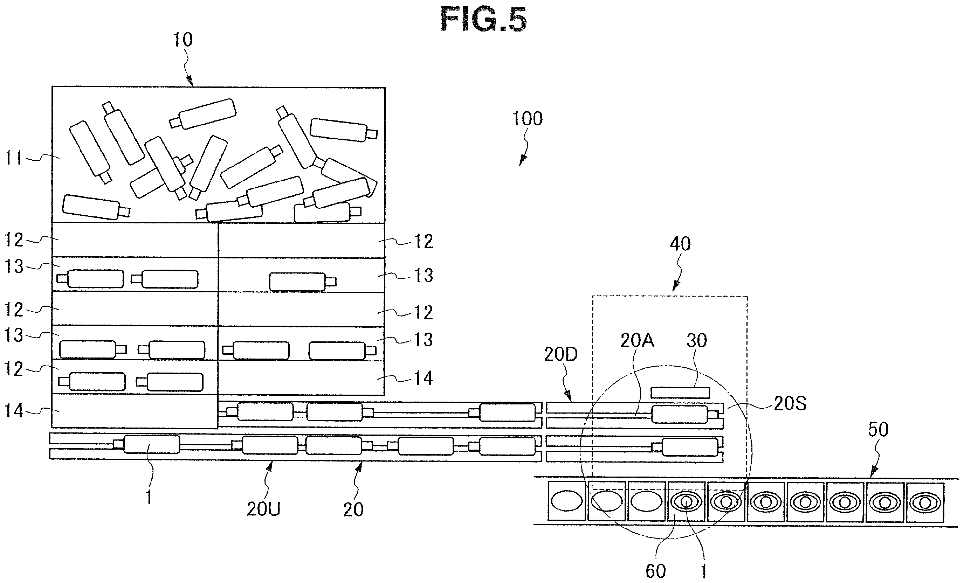

As illustrated in FIG. 5, the article providing device 10 has a configuration in which vertical movement floors 12 and fixed floors 13 are alternately arranged beyond an exit of a container storage portion (a hopper) 11 and the most upstream portion of the conveying device 20 is connected to the exit of the vertical movement floor 12 or the fixed floor 13 at the most downstream through a slanting chute 14.

In the article providing device 10, the floor surfaces of the plurality of vertical movement floors 12 are arranged so as to form a downward inclined line, and the floor surfaces of the plurality of the fixed floors 13 are also arranged so as to form a downward inclined line. Then, when the floor surface of the vertical movement floor 12 pushes the container 1 on the floor surface of the fixed floor 13 upward with an upward movement of the vertical movement floor 12, the inclination of the floor surface of the vertical movement floor 12 applies a conveying force to the container 1 toward the downstream side. The container 1 that receives the conveying force is transferred onto the floor surface of the fixed floor 13 that forms a downward inclination along the downstream conveying direction with a downward movement of the vertical movement floor 12, and is conveyed to the downstream side while sliding on the inclined floor surface of the fixed floor 13, that is, the inclined floor surfaces of the fixed floors 13 forming the downward inclined line in the conveying direction. That is, the article providing device 10 performs conveying motion as pushing all containers 1 upward by the floor surface of the vertical movement floor 12 so as to be placed on the floor surface of the fixed floor 13 regardless of the dimension and the shape of the container 1 or the discharge posture from the container storage portion 11, and puts the containers 1 to the conveying device 20 by a substantially uniform amount.

### (Conveying Device 20)

As illustrated in FIG. 5, the conveying device 20 places the container 1 provided from the article providing device 10 onto a V-shaped conveying surface 20A, and conveys the container to the picking position of the robot 40 in a row of the longitudinal direction (the conveying direction) in which the long shaped direction (the longitudinal direction) of the container 1 follows the V-shaped valley of the V-shaped conveying surface 20A. The center portion in the width direction perpendicular to the longitudinal direction of the container 1 is located in the narrow range of the V-shaped valley of the V-shaped conveying surface 20A. That is, the conveying device 20 of the present invention has the V-shaped conveying surface 20A, and is a device that conveys the container 1 placed on the V-shaped conveying surface 20A, as of the container 1, the extension direction of the V-shaped valley of the V-shaped conveying surface 20A matches the longitudinal direction of that, to the picking position. The longitudinal direction of the container 1 that is conveyed by the V-shaped conveying surface 20A of the conveying device 20 is set in random. In this embodiment, the first and second two conveying devices 20 and 20 are arranged at the right and left sides in parallel, and two rows of all containers 1 in the longitudinal direction are conveyed by both conveying devices 20 to the picking position with the robot 40.

The conveying device 20 is configured by arranging an upstream-side conveying device 20U and a downstream conveying-side device 20D in series. In this embodiment, the first and second two upstream-side conveying devices 20U and 20U are arranged at the right and left sides in parallel, the first and second two downstream-side conveying devices 20D and 20D are arranged at the right and left sides in parallel, and the container 1 is conveyed while being delivered from the upstream-side conveying device 20U to the downstream-side conveying device 20D. Furthermore, the upstream-side conveying device 20U is a conveying device at upstream side or the conveying device that is located near the article providing device 10 in the conveying device 20. Then, the downstream-side conveying device 20D is a conveying device at downstream side or the conveying device that is located near the robot (the picking and placing device) 40 in the conveying device 20.

Further, "configured by arranging an upstream-side conveying device and the downstream-side conveying device in series" includes a case of the upstream-side conveying device 20U and the downstream-side conveying device 20D arranged in series directly and a case of the upstream-side conveying device 20U and the downstream-side conveying device 20D arranged in series while a middle conveying device (not shown) is arranged between the upstream-side conveying device 20U and the downstream-side conveying device 20D.

Since the discharge amount of the container 1 that is picked up from the conveying device 20 by the robot 40 is not uniform, a predetermined amount of the containers 1 are carried to the downstream-side conveying device 20D after stocked in the upstream-side conveying device 20U. In order to stock a predetermined amount of the containers 1, the upstream-side conveying device 20U is operated intermittently or operated while the speed thereof increases and decreases by checking the existence of the container 1 through a sensor or the like. In order to further reliably stock the container 1, the upstream-side conveying device 20U may be configured with two or more conveying devices they are arranged in series. The upstream-side conveying device may have an open-close stopper that may stop or allow to convey the container 1 towards the downstream-side conveying device 20D, and the upstream-side conveying device 20U may operate continuously. In a case where the upstream-side conveying device 20U is operated continuously, upstream-side conveying device 20U is preferably formed with a conveying surface having a high slipping property preventing the container 1, which receives the conveying force by the upstream-side conveying device 20U, from jumping out over the closed stopper.

The downstream-side conveying device 20D conveys the container 1 carried out from the upstream-side conveying device 20D to the picking position with the robot 40. In order to convey the container 1 to the predetermined picking position, the downstream-side conveying device 20D may be stopped by the detection result of the sensor which detects the state a container 1 is come to the picking position. That is, the downstream-side conveying device 20D may be formed as a stopping device 20S, which is not part of the invention (FIG. 5). According to an embodiment of the invention, the downstream-side conveying device 20D may have an open-close stopper that stops the conveying the container 1 at the picking position, and the container 1 may be conveyed to the picking position by the continuous operation of the downstream-side conveying device 20D. That is, the open-close stopper may be formed as the stopping device 20S (FIG. 5). In a case where the downstream-side conveying device 20D is operated continuously, the downstream-side conveying device 20D is preferably formed with a conveying surface having a high slipping property preventing the container 1, which receives the conveying force by the downstream-side conveying device 20D, from jumping out over the closed stopper.

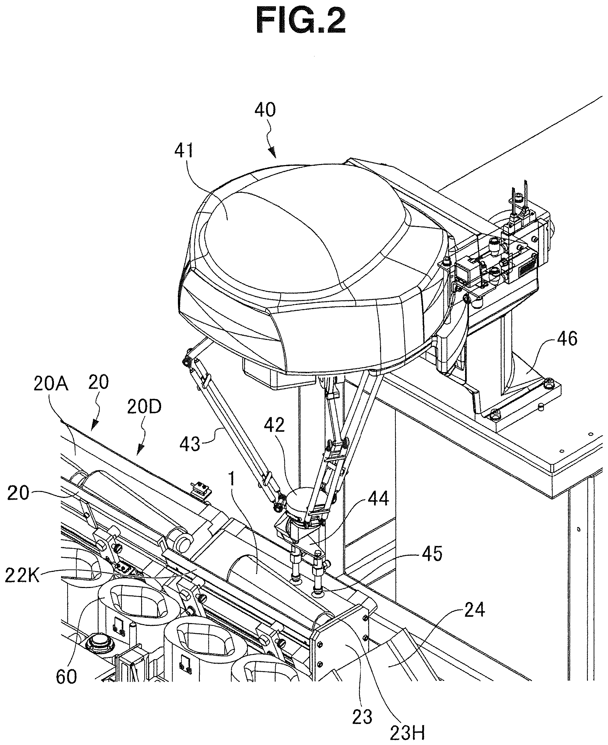

That is, the article supply apparatus 100 has the stopping device 20S that stops the container 1 at the picking position on the V-shaped conveying surface 20A in the downstream-side conveying device 20D. As the stopping device 20S, there is a stopping device that stops the container 1 which is being conveyed in a manner such that the container 1 stops while contacting an open-close or normally-closed stopper 23 (FIG. 2) provided in the downstream-side conveying device 20D.

In a configuration in which the stopping device 20S is formed by the driving control of the downstream-side conveying device 20D, using a sensor which detects a timing that the container 1 which is being conveyed by the downstream-side conveying device 20D reaches the picking position, the downstream-side conveying device 20D may be stopped at the timing that the container 1 reaches the picking position by the detection result of the sensor to make the container 1 be stopped at the picking position. In this case, the V-shaped conveying surface 20A is preferably formed as a conveying surface having a strong gripping force so that the container 1 does not deviate from the V-shaped conveying surface 20A when the downstream-side conveying device 20D stops. For example, the V-shaped conveying surface 20A having an uneven portion or formed of PVC or silicone rubber having a high friction coefficient is employed.

In a configuration in which the stopping device 20S is formed as the open-close or normally-closed stopper 23, a planar or bar-shaped stopper arranged on the conveying path of the downstream-side conveying device 20D is used. The open-close stopper 23 includes a stopper opening/closing driving portion (for example, an electric or pneumatic, linear or rotary driving portion), and the container 1 stops while contacting the stopper 23 set to the closed position to make the container 1 stopped at the picking position. In the normally-closed stopper 23, the container 1 stops while contacting the stopper 23 set to the normally-closed position to make the container 1 stopped at the picking position.

Even in the open-close type or the normally-closed type, the installation height of the stopper 23 is set across the range near the conveying height K of the container 1 on the conveying surface of the V-shaped conveying surface 20A of the downstream-side conveying device 20D to prevent the container 1, which the stopper 23 contacts to stop, from jumping over the stopper 23.

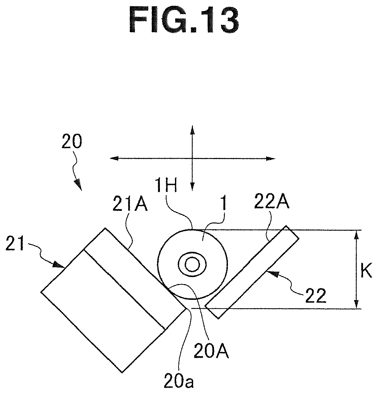

Here, the conveying height K indicates the height from a certain reference surface (for example, the lowest position 20a or the like of the conveying surface 20A in FIG. 13) to the highest position (for example, 1H of FIG. 13) of the container 1. Further, the installation height of the stopper 23 is preferably 0.7 times equal to or larger than the conveying height K of the container 1 so that the jumping out of the container 1 is prevented, and is preferably 1.5 times equal to or smaller than the conveying height K so that the operation of the robot 40 is not disturbed. Here, the installation height of the stopper 23 indicates the height from the reference surface to the highest position (for example, 23H of FIG. 2) of the stopper 23.

The open-close stopper 23 is opened in a case where the container 1 on the downstream-side conveying device 20D is not stopped at the picking position (for example, all containers 1 on the downstream-side conveying device 20D are withdrawn to the downstream-side collection portion 24 of the stopper 23 due to the end of the picking-and-placing operation of the robot 40).

Further, in a case where the containers 1 are distributed to a plurality of robots 40 (for example, a first robot and a second robot), for example, a first open-close stopper 23 is closed to make the container 1 stopped at a first picking position and the container 1 is supplied to the first robot 40, and the first stopper 23 is opened during the picking-and-placing operation of the first robot to supply the container to the second robot 40.

In order to accurately stop the container 1 at the picking position by using the open-close or normally-closed stopper 23, the downstream-side conveying device 20D moves preferably until the container 1 contacts the stopper 23. In this case, the V-shaped conveying surface 20A of the downstream-side conveying device 20D is employed as a conveying surface (for example, a sail cloth or polyurethane impregnated with silicone oil or fluorine resin) having a high a slipping property to prevent the container 1, which receives the conveying force by the downstream-side conveying device 20D, from jumping out over the stopper 23.

In a case where the container 1 is stopped at the picking position by the open-close or normally-closed stopper 23, the container 1 may contact the stopper 23 while the downstream-side conveying device 20D is stopped or decelerated based on the detection result of the sensor that detects the container 1 reaches the picking position or the container 1 may contact the stopper 23 by continuously operating the downstream-side conveying device 20D. In a case where the downstream-side conveying device 20D is stopped or decelerated, it is possible to prevent the container 1 from being frictionally scratched by the V-shaped conveying surface 20A of the downstream-side conveying device 20D when the container 1 is stopped at the picking position. In a case where the downstream-side conveying device 20D is continuously operated, the container 1 may be handled at high efficiency since the speed thereof does not decrease.

Since the downstream-side conveying device 20D conveys the container 1 on the V-shaped conveying surface 20A, the container 1 is conveyed while being located in the center portion of the V-shaped valley of the V-shaped conveying surface 20A or the narrow range near the center portion, and the container 1 is stopped at the picking position on the V-shaped conveying surface 20A by the stopping device 20S. Accordingly, the position (the picking position in a direction perpendicular to the conveying direction of the conveying device 20 and a direction following the conveying device) where the robot 40 grips the container 1 may be uniformly set. Accordingly, a sensor or an image processing device for detecting the positional deviation of the container 1 with respect to the downstream-side conveying device 20D is needless, and even in a case where the picking position of the robot 40 for the container 1 is finely adjusted, detecting the positional deviation of the container 1 may be performed using a low-cost distance sensor or a sensor for detecting the existence. Further, since the picking position of the robot 40 for the container 1 is easily set, the movement of the robot 40 may be easily optimized, and hence the dimension of freedom of the robot 40 may be decreased to be five axes or less as described later.

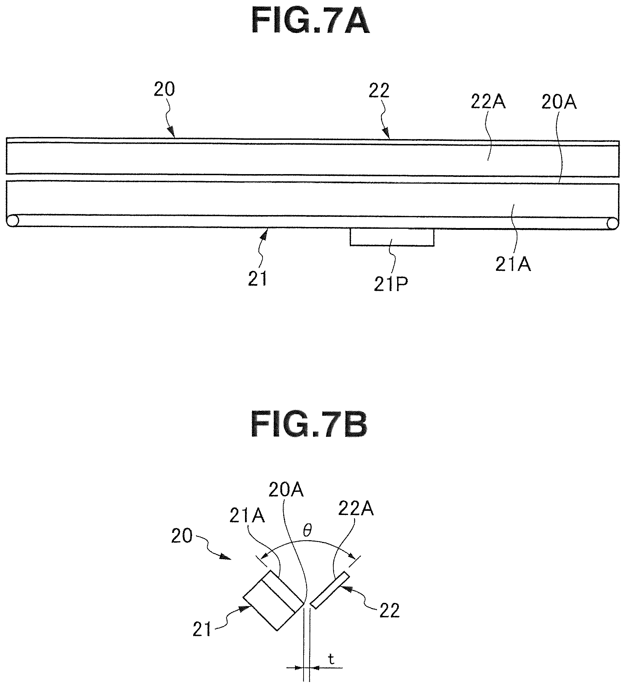

Here, as illustrated in FIGs. 7A and 7B, the conveying device 20 (the upstream-side conveying device 20U and the downstream-side conveying device 20D) may form the V-shaped conveying surface 20A by a conveying surface 21A of a belt conveyor 21 and a conveying surface 22A of a plate-shaped conveying guide 22 that are opposed to each other on right and left sides. In FIGs. 7A and 7B, the reference numeral 21P indicates a belt driving device. The conveying device 20 may arrange the belt conveyor 21 and the conveying guide 22 to any one of the right and left positions, and may be manufactured at low cost by forming one of the right and left positions thereof as the conveying guide 22.

The material of the said conveying guide 22 configuring the conveying device 20 is not particularly limited, but it is preferable to improve the surface slipping property. As an example, a sliding tape formed of Teflon (registered trademark) is stuck to a surface of a metallic or resinous plate forming the conveying guide 22 or the conveying guide 22 is formed of highly dense polyethylene having a high slipping property is preferable.

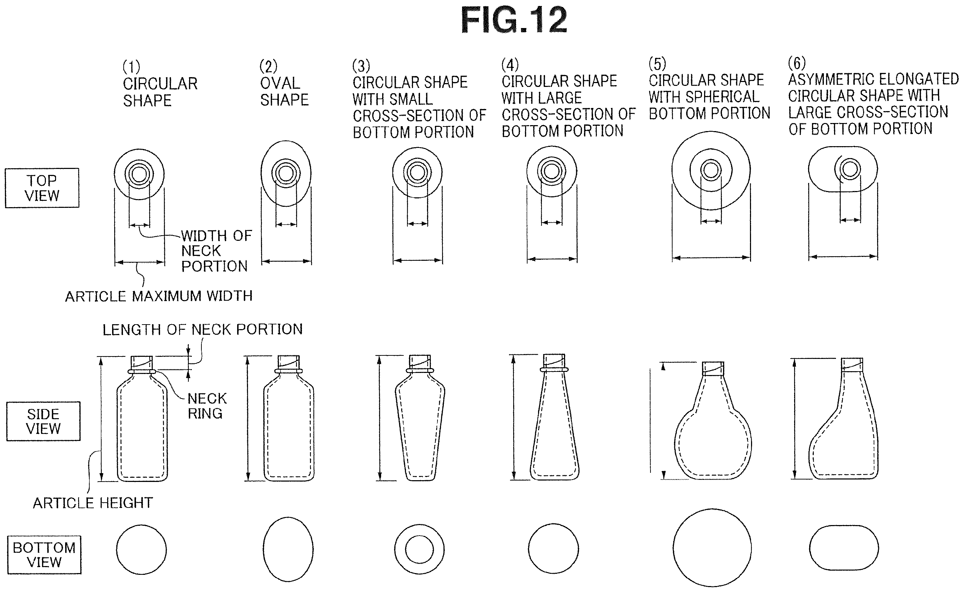

In order to position the front end of the container 1 conveyed on the V-shaped conveying surface 20A of the conveying device 20 in the conveying direction at the center portion of the V-shaped valley in the V-shaped conveying surface 20A, the inclination degrees of the right and left conveying surfaces 21A and 22A are substantially set to the same angle, and the open angle θ between the right and left conveying surfaces 21A and 22A is preferably 80 to 150° and more preferably 85 to 115°. The gap t between the right and left conveying surfaces 21A and 22A may not be formed, and when formed, the gap t is preferably set to 10 to 30% of the maximum width (FIG. 12) of the container 1. The gap t is appropriately adjusted depend on the shape of the container 1.

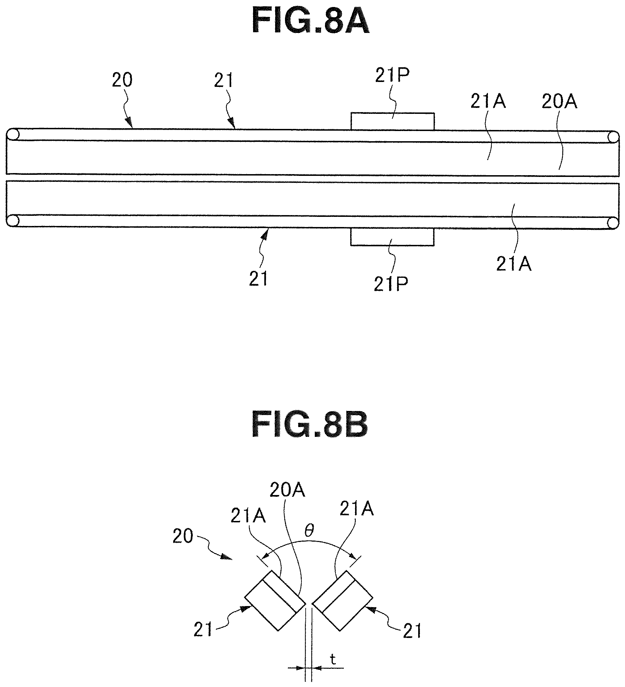

Furthermore, as illustrated in FIGs. 8A and 8B, the conveying device 20 (the upstream-side conveying device 20U and the downstream-side conveying device 20D) may form the V-shaped conveying surface 20A by the conveying surfaces 21A and 21A of the belt conveyors 21 and 21 that are opposed to each other on right and left sides. When both right and left sides of the conveying devices are formed as belt conveyors 21, the container 1 may be reliably conveyed by applying a large conveying force to the container 1. The appropriate values of the open angle θ and the gap t between the right and left conveying surfaces 21A and 21A are the same as the case (FIGS. 7A and 7B) where the V-shaped conveying surface 20A is formed by the conveying surface 21A of the belt conveyor 21 and the conveying surface 22A of the conveying guide 22.

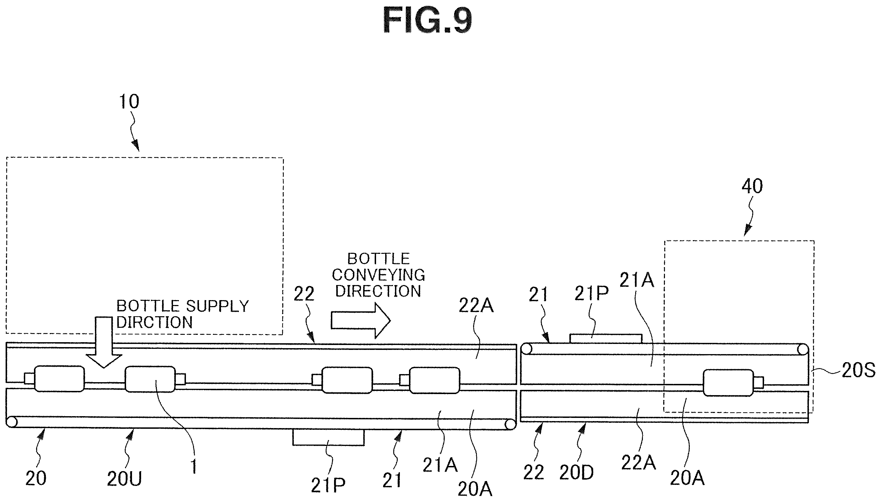

In the article supply apparatus 100, the installation direction of the robot 40 as the picking and placing device is not particularly limited. However, in a case where the conveying device 20 includes the upstream-side conveying device 20U and the downstream-side conveying device 20D as described above, as illustrated in FIG. 9, the article providing device 10 is provided at one side of the direction perpendicular to the conveying direction of the upstream-side conveying device 20U, that is, one side of the right and left sides of the conveying direction, and the robot 40 is preferably provided at the same side of the article providing device 10 is being at one side of the direction perpendicular to the conveying direction of the downstream-side conveying device 20D, that is, one side of the right and left sides of the conveying direction. Then, in a case where the downstream-side conveying device 20D forms the V-shaped conveying surface 20A by the conveying surface 21A of the belt conveyor 21 and the conveying surface 22A of the conveying guide 22 opposed to each other, as illustrated in the below section (A), the belt conveyor 21 is arranged at the installation side of the robot 40 in any one side of the right and left sides in the conveying direction of the downstream-side conveying device 20D. Further, in a case where the upstream-side conveying device 20U forms the V-shaped conveying surface 20A by the conveying surface 21A of the belt conveyor 21 and the conveying surface 22A of the conveying guide 22 opposed to each other, as illustrated in the below section (B), the conveying guide 22 is arranged at one side of the direction perpendicular to the conveying direction of the upstream-side conveying device 20U, that is, the installation side of the article providing device 10 of the right and left sides in the conveying direction.

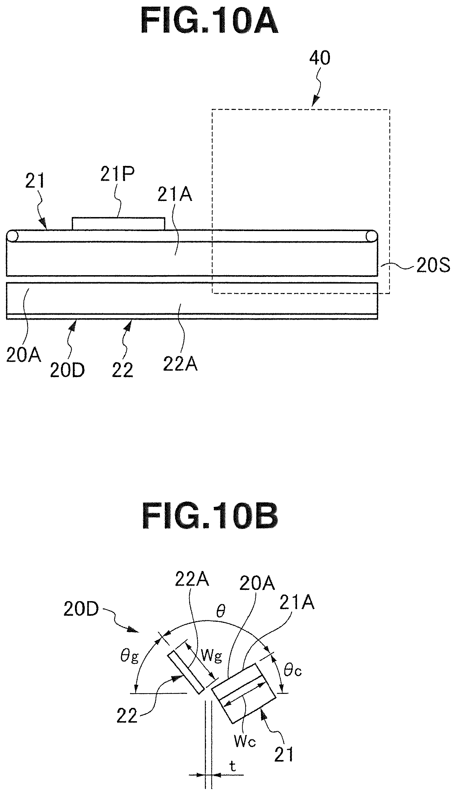

### (A) Downstream-side Conveying Device 20D (FIGs. 10A and 10B)

In the downstream-side conveying device 20D in which the container 1 is picked up by the robot 40 as the picking and placing device, it is preferable that the inclination angle θc formed between the conveying surface 21A of the belt conveyor 21 and the horizontal plane be gentler than the inclination angle θg formed between the conveying surface 22A of the conveying guide 22 and the horizontal plane in order to increase the conveying force. The inclination angle θc is perferably 10 to 40° and more preferably 20 to 30°. Further, since the conveying surface 21A is largely opened when the inclination angle θc is small, the robot 40 may easily pick up the container 1. Further, when the robot 40 is arranged at the side of the belt conveyor 21, the robot 40 may be installed at a position close to the belt conveyor 21 up to the limit in which the robot 40 may perform the picking operation, and hence the operation range in which the robot 40 places the container 1 may be largely set in the conveying guide 22. At this time, when the inclination angle θg formed between the conveying surface 22A of the conveying guide 22 facing the belt conveyor 21 and the horizontal plane is large, the container 1 may be further reliably pressed against the belt conveyor 21. The inclination angle θg is preferably 40 to 65° and more preferably 45 to 55°. When the conveying force of the belt conveyor 21 is large, the conveying device may be provided at a low cost since the side of conveying guide 22 does not need to be formed as a belt conveyor. The appropriate values of the open angle θ and the gap t of the right and left conveying surfaces 21A and 22A are set as described above.

The downstream-side conveying device 20D (FIGs. 10A and 10B) forms the V-shaped conveying surface 20A by the conveying surface 21A of the belt conveyor 21 and the conveying surface 22A of the conveying guide 22 opposed to each other in the conveying device 20, and it is preferable that the width of the conveying surface 21A which has gentler inclination be larger than the width of the conveying surface 22A when the inclination angle θc formed between the conveying surface 21A of the belt conveyor 21 and the horizontal plane is gentler than the inclination angle θg formed between the conveying surface 22A of the conveying guide 22 and the horizontal plane (θc < θg). That is, in the downstream-side conveying device 20D, it is preferable that the V-shaped conveying surface 20A is formed by the conveying surface 21A of the belt conveyor 21 and the conveying surface 22A of the conveying guide 22 opposed to each other and the width wc of the conveying surface 21A of the belt conveyor 21 is larger than the width wg of the conveying surface 22A of the conveying guide 22 (FIGs. 10A and 10B). In this way, the conveying device may be provided at a low cost since the conveying force applied from the belt conveyor 21 to the container 1 become large and the side of conveying guide 22 does not need to be formed as a belt conveyor 21. It is particularly preferable that the width wg of the conveying surface 22A of the conveying guide 22 be set as small as the width wg of the conveying surface 22A of the conveying guide 22K (FIG. 2) of the vicinity of the position where the robot 40 picks up the container 1 in that the operation of the robot is not disturbed.

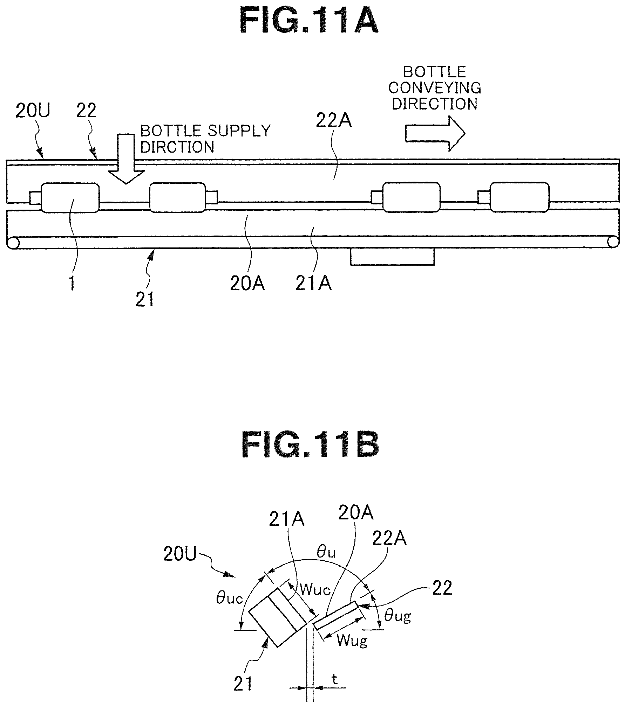

### (B) Upstream-side Conveying Device 20U (FIGs. 11A and 11B)

In the upstream-side conveying device 20U to which the container 1 is provided from the article providing device 10, it is desirable that the conveying guide 22 be arranged at the side of the article providing device 10 arranged, to prevent the container 1 provided in the direction perpendicular to the conveying direction of the upstream-side conveying device 20U from being caught by the belt edge of the moving belt conveyor 21. In order to smoothly move the container 1 to the downstream-side conveying device 20D, the inclination angle θug formed between the conveying surface 22A of the conveying guide 22 and the horizontal plane is preferably set to be substantially equal to the inclination angle θc of the belt conveyor 21 of the downstream-side conveying device 20D. When the container 1 is provided from the conveying guide 22 of the upstream-side conveying device 20U by the article providing device 10, the container 1 may bounce on the surface for receiving the container 1 in the upstream-side conveying device 20U. In order to prevent this problem, it is preferable that the upstream-side conveying device 20U facing the conveying guide 22 be formed as the conveying belt conveyor 21. Since the container 1 is received while contacting the belt surface of the belt conveyor 21, a slight impact absorbing effect may be obtained. In order to smoothly move the container 1 to the downstream-side conveying device 20D, it is preferable that the inclination angle θuc formed between the conveying surface 21A of the belt conveyor 21 and the horizontal plane be substantially equal to the inclination angle θg of the conveying guide 22 in the downstream-side conveying device 20D.

In the upstream-side conveying device 20U (FIGs. 11A and 11B), when the V-shaped conveying surface 20A is formed by the conveying surface 21A of the belt conveyor 21 and the conveying surface 22A of the conveying guide 22 opposed to each other in the conveying device 20, and the inclination angle θug formed between the conveying surface 22A of the conveying guide 22 and the horizontal plane is gentler than the inclination angle θuc formed between the conveying surface 21A of the belt conveyor 21 and the horizontal plane (θug < θuc), it is prefarable that the width of the conveying surface 22A be larger than the width of the conveying surface 21A opposed thereto. That is, in a case where the V-shaped conveying surface 20A is formed by the conveying surface 21A of the belt conveyor 21 and the conveying surface 22A of the conveying guide 22 opposed to each other in the upstream-side conveying device 20U, it is preferable that the width wug of the conveying surface 22A of the conveying guide 22 be larger than the width wuc of the conveying surface 21A of the belt conveyor 21 (FIGs. 11A and 11B). In this way, when the container 1 is provided from the article providing device 10, the belt conveyor 21 applies a conveying force to the container 1 after the container is completely included in the width wug of the conveying surface 22A of the conveying guide 22, to convey the container 1 may stably, and the conveying device may be provided at a low cost since the conveying side of guide 22 does not need to be formed as a belt conveyor 21.

### (Finding Means 30)

As illustrated in FIG. 5, the finding means 30 finds the longitudinal direction of the container 1 before the container 1 conveyed by the conveying device 20 is picked up by the robot 40 at the picking position. That is, the finding means 30 finds whether the opening portion or the bottom portion of the container 1 exist in any one of the forward direction and the backward direction following the conveying direction on the conveying device 20.

Furthermore, while the container 1 normally stands, the opening portion becomes the upper side, and the bottom portion becomes the lower side.

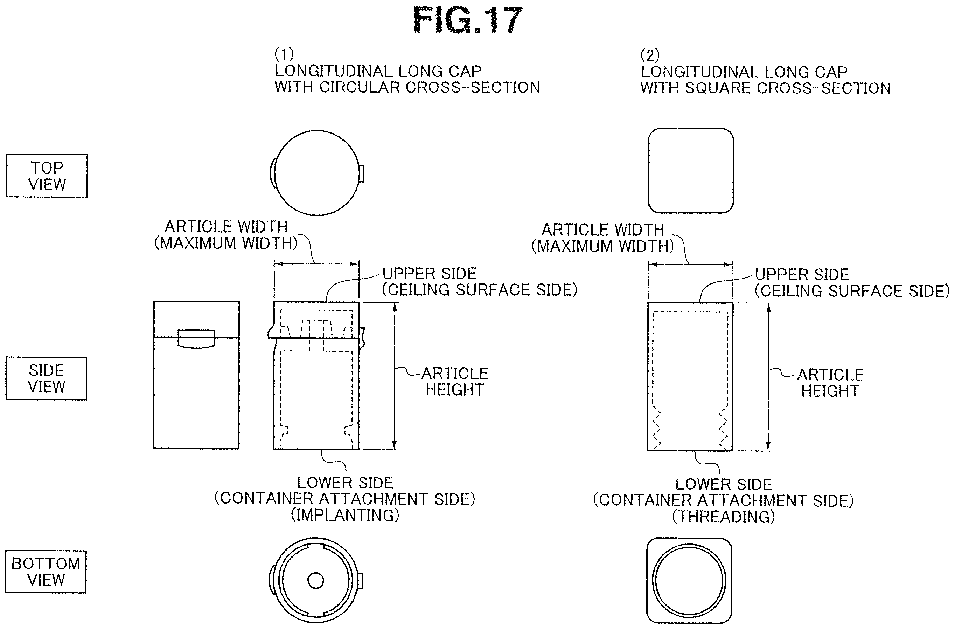

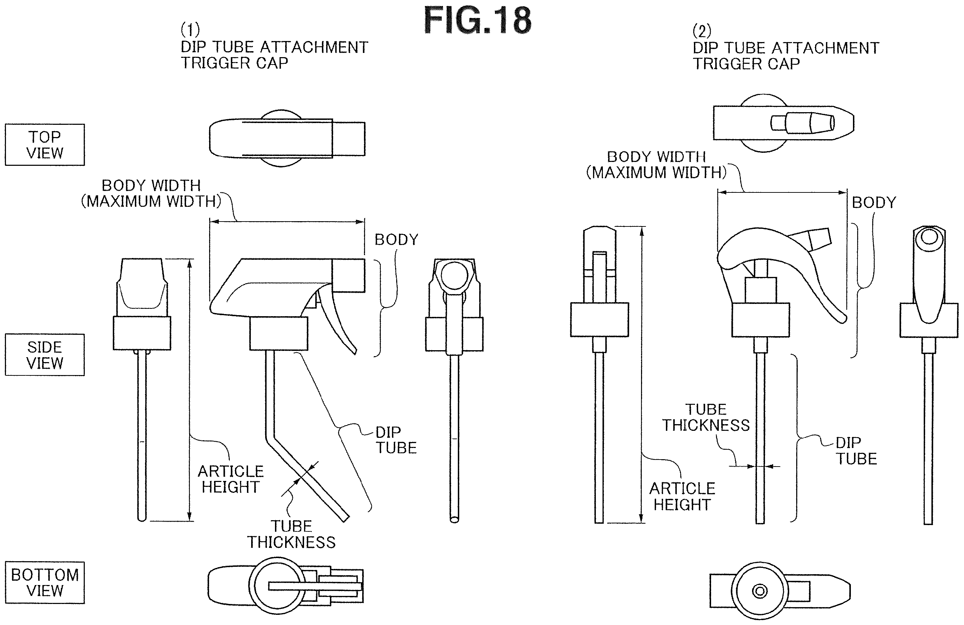

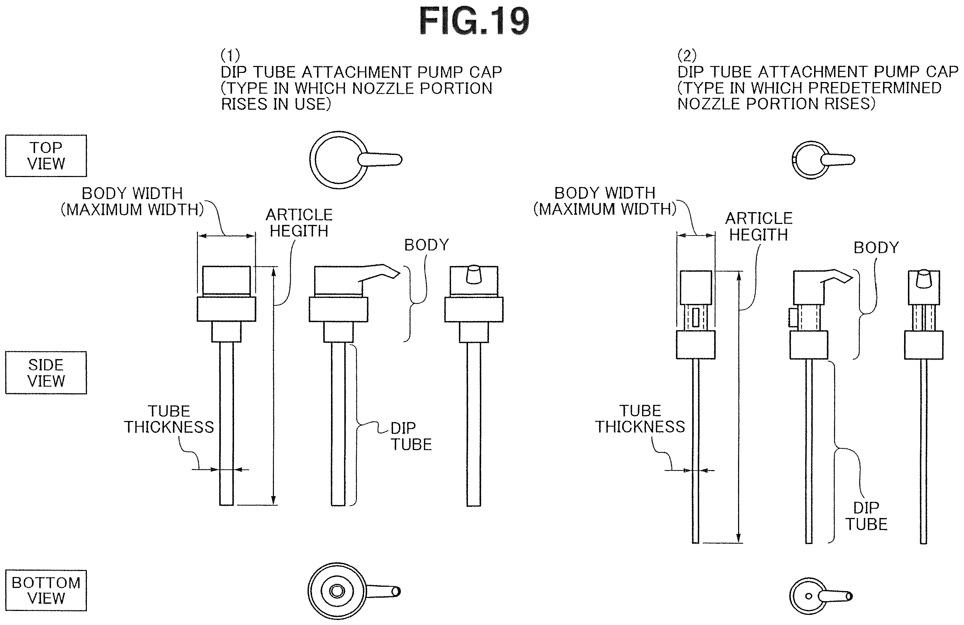

Further, the finding means 30 finds whether each of the upper and lower sides of the cap 2 illustrated in FIG. 17 exists in any one of the forward direction and the backward direction following the conveying direction on the conveying device 20 (not illustrated). Further, the finding means 30 finds whether a dip tube attachment trigger cap illustrated in FIG. 18 or a body and a dip tube portion of a dip tube attachment pump cap illustrated in FIG. 19 exists in any one of the forward direction and the backward direction following the conveying direction on the conveying device 20 (not illustrated).

Furthermore, in a state where the container 1 normally stands, the ceiling surface side of the cap 2 becomes the upper side, and the attachment side with respect to the container 1 becomes the lower side.

The finding means 30 is provided in both the first and second conveying devices 20 and 20, and finds the top-bottom direction of the container 1 by the conveying process for the container 1 using the upstream-side conveying device 20U, the conveying process for the container 1 using the downstream-side conveying device 20D, or the conveying tail end of the container 1 (the stop position of the container 1) using the downstream-side conveying device 20D. Since the container 1 is reliably stopped when the finding means 30 finds the longitudinal direction of the container 1 by the conveying tail end of the container 1 using the downstream-side conveying device 20D, the erroneous findings for the longitudinal direction may be prevented.

The finding means 30 may include a sensor that finds the distance with respect to the target or the existence of the target by a dotted or linear beam, a sensor that finds the color difference of the target, and an image processing device that finds the shape of the target. An optical sensor that may find the existence of the target by a dotted beam is preferable in that the price thereof is low.

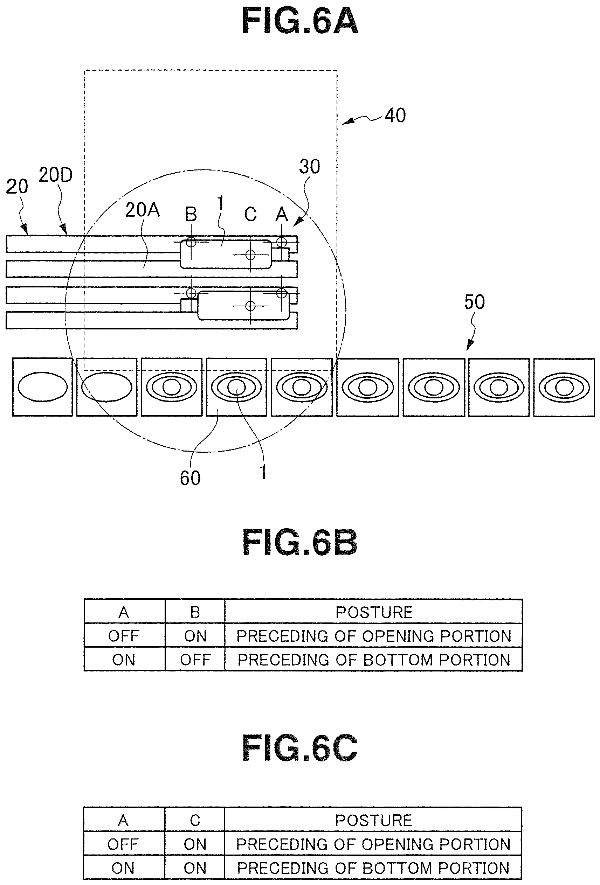

FIGs. 6A to 6C illustrate a longitudinal direction finding method of the finding means 30 that is configured as an optical sensor capable of finding the existence of the target by a dotted beam. Here, a difference in shape is used in which the neck portion of the container 1 is thinner than the body portion of the container 1. Three sensors A, B, and C are arranged at the conveying tail end (the stop position) of the container 1 in the first and second downstream-side conveying devices 20D. The sensors A, B, and C are respectively arranged at the front end portion, the rear end portion, and the middle portion of the predicted stop range (the range corresponding to the length of the container 1) in the conveying tail end of the container 1. Then, the sensors A and B are arranged above one side of the conveying device 20 (for example, the side of the belt edge of the belt conveyor 21) in the direction perpendicular to the conveying direction from the center portion of the V-shaped valley in the V-shaped conveying surface 20A. Further, the sensor C (the container existence checking sensor) is arranged above the center portion of the V-shaped valley in the V-shaped conveying surface 20A. As illustrated in FIG. 6B, preceding of opening portion of the container 1 is found when the sensor A is an OFF state and the sensor B is an ON state, and preceding of the bottom portion of the container1 is found when the sensor A is an ON state and the sensor B is an OFF state. As illustrated in FIG. 6C, when the sensor C is an ON state where the existence of the container 1 is confirmed, preceding of the opening portion of the container 1 is found when the sensor A is an OFF state and preceding of the bottom portion of the container 1 is found when the sensor A is an ON state. When the sensor A and the sensor C are used as illustrated in FIG. 6C, it is preferable in that the sensor B to be moved due to the length of the container 1 is not needed.

### (Robot 40)

The installation direction of the robot 40 as the picking and placing device with respect to the downstream-side conveying device 20D is not particularly limited, but it is preferable that the robot 40 be installed at one side of the direction perpendicular to the conveying direction of the downstream-side conveying device 20D. Then, the robot 40 is controlled to be operated according to the found result of the finding means 30, and pick the container 1 from the conveying device 20 and place it in order to place on the container 1 into the holder 60 existing at the placing position of the holder conveying device 50 in a uniform posture (FIGs. 2 to 4). Further, the robot 40 as the picking and placing device may be suspended from the ceiling.

Furthermore, as the picking and placing device that picks up and places the container 1 as described above, an automatic machine or a robot may be used. As the automatic machine, the automatic machine may be driven by a pneumatic or electric driving portion, a cam, or a link mechanism. In these days, it is advantageous to use a commercial robot compared to the automatic machine from the viewpoint of the easiness of the change of the operation, the high degree of freedom, the fast movement, and the cost. The picking and placing device such as a robot having a degree of freedom of five axes or more is preferable because the degree of freedom of handling the container 1 is high. The type of robot is not limited, but a vertical articulated robot having five axes, six axes, or seven axes, a scalar robot having an additional axis provided at the front end thereof so as to be rotatable in the vertical direction, a parallel link robot of four axes having an additional axis provided at the front end thereof so as to be rotatable in the vertical direction, and a parallel link robot of six axes are preferable. Among these, the parallel link robot of six axes is more preferable, of that the robot installation space is compact and operable at a high speed.

Here, the five axes as the appropriate degree of freedom necessary for the picking and placing device includes the following axes. Three axes (first to third axes) of the five axes are driving axes necessary for positioning the article gripping portion (the hand portion) of the picking and placing device to an arbitrary position in the XYZ space. One axis (fourth axis) among the remaining two axes is a driving axis that may rotate the article gripping portion around the Z axis of the XYZ space, and the axis may or may not intersect the article gripping portion. The remaining one axis (the fifth axis) is a driving axis that may rotate the article gripping portion around the axis of the horizontal direction (of the arbitrary direction) perpendicular to the Z axis, and the axis may or may not intersect the article gripping portion. In other words, the fourth axis is a roll axis that rotates the article gripping portion around the Z axis of the XYZ space, and the fifth axis is a pitch axis that is opposed to the roll axis. The degree of freedom of the sixth axis added to the picking and placing device corresponds to the degree of freedom of a driving axis that may rotate the article gripping portion around the rotation axis different from (that does not match and is not parallel to) the fourth and fifth axes.

Further, in the picking and placing device, the hand portion called an end effector that grips the container of the automatic machine or the robot is formed as an open-close type or a vacuum adsorption type. The open-close type hand portion grips the body portion or the neck portion of the container 1. When the vacuum-adsorption operation may not be easily performed due to the heavy weight of the handled container 1 or the uneven portion formed on the surface thereof, the open-close type hand portion is selected. The open-close hand portion is formed as an electric or pneumatic type, and when adjusting the opening degree with respect to the target is needed, the electric open-close type is desirable. The vacuum-adsorption type hand portion generally adsorbs the body portion of the container 1. When the adsorption position may be ensured due to the light weight of the handled container 1 and the sufficient width of the plane or the curved surface as the side surface of the container 1, because the time for gripping the container or releasing the gripping state may be shortened, the vacuum-adsorption type is selected. In the vacuum-adsorption type hand portion, a portion contacting the container 1 is generally formed as a vacuum pad. It is preferable to form the vacuum pad in a bellows shape compared to a simple shape in that the slight deviation in the relative position between the front end of the vacuum pad and the container 1 may be handled. Further, when a buffer portion such as a spring is provided in the vacuum pad attachment portion, the vacuum pad may be surely pressed against the container 1 so as to adsorb that.

The robot 40 illustrated in FIGS. 1 to 4 is a parallel link robot, and includes a basis portion (not illustrated) that is enclosed in a housing 41, a movable plate 42, and a link portion 43 of an arm connecting the basis portion to the movable plate 42. The lower surface of the movable plate 42 is provided with an attachment member 44, and a hand portion 45 is attached to the attachment member 44. The robot 40 is arranged so that a fixed portion 46 is attached to a trestle or the like.

FIG. 2 (step 1) illustrates a state when the hand portion 45 of the robot 40 starts to move to the adsorption position (the picking position) in response to the longitudinal direction of the container 1. At this time, the container 1 is stopped at the predetermined position (the picking position) by the stopper 23 provided in the conveying tail end of the downstream-side conveying device 20D, and the longitudinal direction is found by the finding means 30. Furthermore, the stopper 23 is an example of the stopping device 20S.

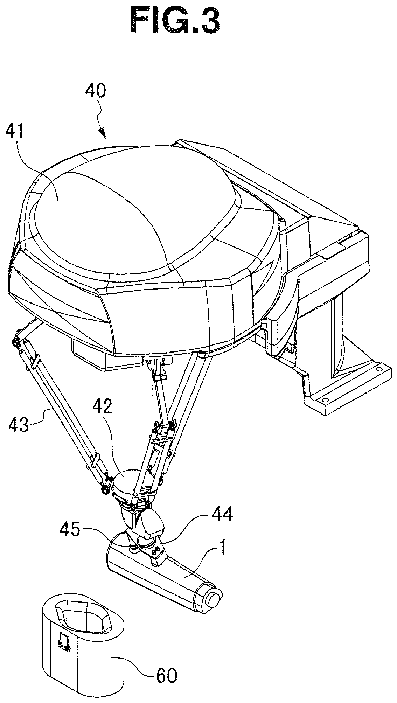

FIG. 3 (step 2) illustrates a state where the hand portion 45 of the robot 40 picks up the container 1 in an adsorption state.

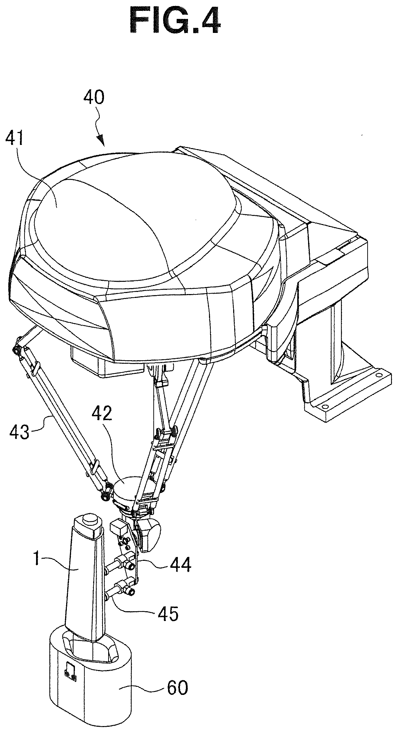

FIG. 4 (step 3) illustrates a state where the robot40 rotated the hand portion 45 to make the bottom portion of the container 1 face downwards and moved that to the insertion position with respect to the holder 60 on the holder conveying device 50. Subsequently, the robot 40 moves the hand portion 45 downward, and inserts (places) the container 1 into the holder 60. After the container 1 is placed, the hand portion 45 of the robot 40 is returned to the standby position (step 1).

Before the hand portion 45 is returned to the standby position (step 1) after the hand portion 45 of the robot 40 picked up the container 1 (step 2), the conveying device 20 conveys the next container 1 to the picking position.

That is, in the embodiment, the robot 40 grips and picks up the container 1 in the substantially vertical direction based on the information of the longitudinal direction of the container 1 in the first and second downstream-side conveying devices 20D, rotates the container 1 around the Z axis (rolling by the roll axis) of the XYZ space so that the opening portion (the upper portion) of the container 1 easily faces the upward direction in after, rotates the container 1 (rolling by the pitch axis) so that the opening portion (the upper portion) faces the upward direction, and moves in the horizontal direction and moves downward so that the container 1 is placed at a predetermined placing position. The operation of picking up the container 1 in the robot 40, the rotation operation in the two directions, the horizontal movement operation, and the downward movement operation may be sequentially performed or may be simultaneously performed by the combination of several movement operations. Here, these operations may be determined in consideration of the peripheral device bypassing operation or the maximum operation speed.

Further, in the embodiment, two article conveying portions as the first and second downstream-side conveying devices 20D are provided for one robot 40. This is because that, the conveying device 20 includes a plurality of conveying portions that independently convey the containers 1, and the container 1 is reliably conveyed to the other conveying portion while the robot 40 picks up and places container 1 from one conveying portion, prevents the robot 40 from waiting for the container. In general, the process time in which the robot 40 processes one container 1 is 1.0 to 2.0 seconds. If the process time is set to 1.5 seconds, forty containers 1 may be processed every minute. However, if the containers 1 are conveyed by only one conveying portion, the robot 40 needs a standby time of 0.2 seconds, and hence the process time becomes 1.7 seconds. Accordingly, the number of the containers 1 to be processed becomes thirty five every minute, and hence the process ability is largely degraded. Even when a large number of conveying portions of the conveying device 20 exist, the movable range of the robot 40 increases, and the robot 40 increases in size. Accordingly, it is desirable that the number of the conveying devices 20 is two or three. However, when the conveying device 20 has an ability higher than the process ability of the robot 40 so that the standby time of the robot 40 becomes zero or substantially zero, it is preferable that the number of the conveying devices 20 is one in that the price is low and the installation area is small.

Furthermore, in a case where an ability of supplying the container 1 to the robot 40 is sufficiently high, one or plural conveying portions may be provided with two or more robots 40. In this case, the stopping device 20S that is provided in the picking portion of the upstream robot 40 is formed as the open-close stopper 23. In order to perform the picking-and-placing operation by the downstream robot 40, the container 1 is necessary to pass by the picking position of the upstream robot 40 so as to be sent to the downstream robot 40 while the open-close stopper 23 provided at the picking portion of the upstream robot 40 is opened during the picking-and-placing operation of the upstream robot 40. In order to perform the picking-and-placing operation by the upstream robot 40, the container 1 is necessary to be stopped while the open-close stopper 23 provided at the picking portion of the upstream robot 40 is closed.

### (Holder Conveying Device 50)

The holder conveying device 50 is provided at the other side (the opposite side to one side of the downstream-side conveying device 20D provided with the robot 40) of the direction perpendicular to the conveying direction of the downstream-side conveying device 20, and circulate the holder 60 as the placing position for the container 1 by the robot 40. The holder 60 is preferable in that various shapes and sizes of the container 1 may be easily handled. When the robot performs the placing operation, it is desirable to stop the holder 60 because a placement failure in which the container does not enter the holder 60 or such may be reliably prevented. Further, the container may be placed while following the moving speed of the holder 60 during the movement of the holder 60. The placing position for the container 1 by the robot 40 is not limited to the holder conveying device 50, but a belt conveyor or a top chain conveyor may be employed. When the robot places the container, a placement failure such as a falling state may be prevented from during the placement if the belt conveyor or the top chain conveyor is stopped. However, it is need to slowly accelerate the belt conveyor or the top chain conveyor not the container to fall after the placement. Placing the container substantially follows the moving speed in an operation state or a deceleration state is preferable because no acceleration or only slight acceleration is required after the placement to be shortened the acceleration period and to prevent the falling of the container.

FIG. 12 illustrates an example of the container 1 as the long shaped article which corresponds to the target of the article supply apparatus 100 of the embodiment. The container 1 is formed in a shape in which the article height (the article length) is long with respect to the article width. The long shaped container 1 denotes a container of which the article height is substantially 1.3 times equal to or larger than the article width. In a case where the container 1 is a bottle having an annular structure called a neck ring in the vicinity of an opening portion through which the content is charged into the container as illustrated in (1), (2), (3) and (4) of FIG. 12, the neck portion denotes a thin portion above the neck ring. In a case where the container 1 is a bottle without an annular structure called a neck ring as illustrated in (5) and (6) of FIG. 12, the neck portion denotes a portion such as a screw portion or a driving portion to which a cap is fixed and that is near an opening portion.

Hereinafter, influence of a shape of container on the conveying posture will be described when various shapes of containers 1 are placed and conveyed on the V-shaped conveying surface 20A of the conveying device 20.

FIG. 13 illustrates that the center portion of the small columnar container 1 in the width direction is located in the V-shaped valley of the V-shaped conveying surface 20A when the V-shaped conveying surface 20A is formed by the conveying surface 21A of the belt conveyor 21 and the conveying surface 22A of the conveying guide 22 opposed to each other in the conveying device 20. Even when any one of the opening portion and the bottom portion of the container 1 is in the forward side in the conveying direction of the conveying device 20, the center portion of the container 1 in the width direction may be located at the identical position of the V-shaped valley of the V-shaped conveying surface 20A.

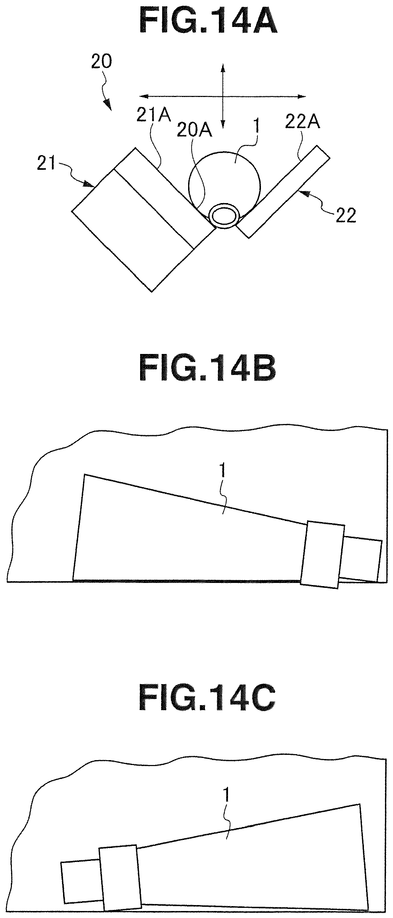

FIGs. 14A to 14C illustrate that the center portion of the large conical container 1 in the width direction is located in the V-shaped valley of the V-shaped conveying surface 20A when the V-shaped conveying surface 20A is formed by the conveying surface 21A of the belt conveyor 21 and the conveying surface 22A of the conveying guide 22 opposed to each other in the conveying device 20. Even when any one of the opening portion and the bottom portion of the container 1 is at the forward side in the conveying direction of the conveying device 20 (FIGs. 14B and 14C), the center portion of the container 1 in the width direction may be located at the identical position of the V-shaped valley of the V-shaped conveying surface 20A.

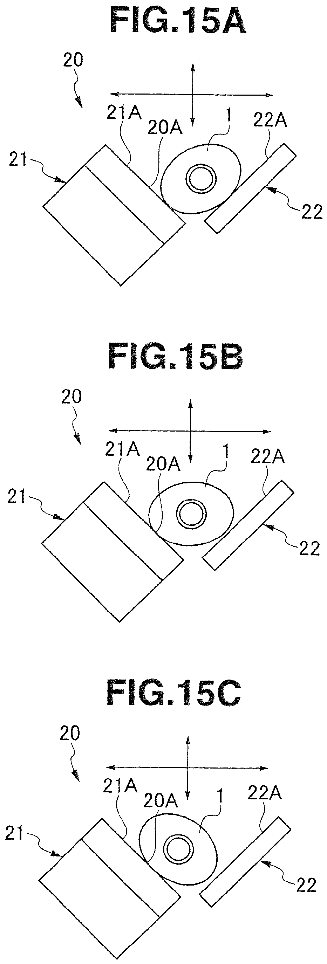

FIGs. 15A to 15C illustrate that the center portion of the container 1 ((2) of FIG. 12) having an oval shape in the top view in the width direction is not essentially located at the identical position of the V-shaped valley of the V-shaped conveying surface 20A when the V-shaped conveying surface 20A is formed by the conveying surface 21A of the belt conveyor 21 and the conveying surface 22A of the conveying guide 22 opposed to each other in the conveying device 20 and the inclination angle θc formed between the conveying surface 21A of the belt conveyor 21 and the horizontal plane is substantially equal to the inclination angle θg formed between the conveying surface 22A of the conveying guide 22 and the horizontal plane. The same applies to the case where any one of the opening portion and the bottom portion of the container 1 is at the forward side in the conveying direction of the conveying device 20. In FIG. 15A, the center portion of the container 1 in the width direction is deviated to the conveying guide 22 of the V-shaped conveying surface 20A. In FIG. 15B, the center portion of the container 1 in the width direction is located at the V-shaped valley of the V-shaped conveying surface 20A. In FIG. 15C, the center portion of the container 1 in the width direction is deviated to the belt conveyor 21 of the V-shaped conveying surface 20A. In such a case, the robot 40 is controlled so that the center portion of the container 1 in the width direction may be absorbed by the hand portion 45 of the robot 40 in a manner such that finding the deviation of the container 1 in the V-shaped conveying surface 20A of the conveying device 20 is in any one of FIGS. 15A to 15C by a sensor of an image processing device, or providing the container 1 which is carried to the V-shaped conveying surface 20A set to any one of FIGS. 15A to 15C by a pre-processing device provided at the upstream side of the conveying device 20.

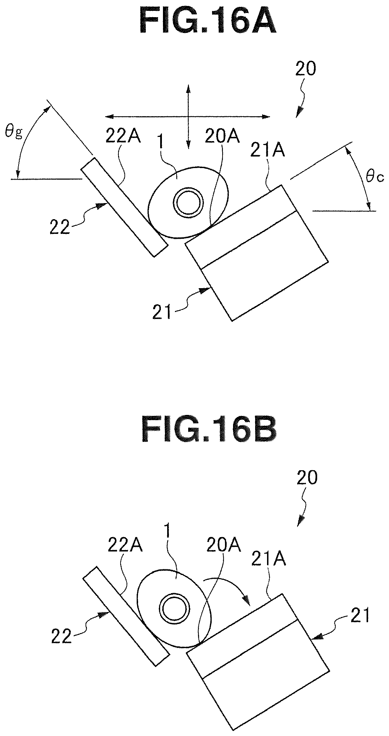

FIGs 16A and 16B illustrate that the oval long diameter of the container 1 is parallel to the gently inclined conveying surface 21A of the belt conveyor 21 and the center portion of the container 1 in the width direction is deviated to the belt conveyor 21 of the V-shaped conveying surface 20A as illustrated in FIG. 16A when the V-shaped conveying surface 20A is formed by the conveying surface 21A of the belt conveyor 21 and the conveying surface 22A of the conveying guide 22 opposed to each other in the conveying device 20 and the inclination angle θc formed between the conveying surface 21A of the belt conveyor 21 and the horizontal plane and the inclination angle θg formed between the conveying surface 22A of the conveying guide 22 and the horizontal plane are set to be of θc < θg. The same applies to the case where any one of the opening portion and the bottom portion of the container 1 is at the forward side in the conveying direction of the conveying device 20. Furthermore, when the oval long diameter of the container 1 is placed on the conveying surface 22A of the conveying guide 22, as illustrated in FIG. 16B, the container 1 which is not stable on the steeply inclined conveying surface 22A rotates by itself, and hence has a conveying posture illustrated in FIG. 16A. That is, when the container 1 has an oval shape in the top view or the container (example: (6) of FIG. 12) has a shape similar thereto, providing θc < θg make the conveying posture such as illustrated in FIG. 16A, and hence the robot is easily controlled.

FIG. 17 illustrates an example of a cap as a long shaped article which corresponds to the target of the article supply apparatus 100 of the embodiment. The cap is formed in a shape in which the article height (the article length) is long with respect to the article width. The cap as the long shaped article denotes a shape in which the article height is substantially 1.3 times equal to or larger than the article width. The finding (the finding on the longitudinal direction of the article) on whether the upper side precedes or the lower side precedes may be easily performed based on a difference in shape in which the upper side has a plane shape and the lower side has a recess shape.

FIG. 18 is an example of a dip tube attached trigger cap as a long shaped article which corresponds to the target of the article supply apparatus 100 of the embodiment. Since the body width and the dip tube thickness are largely different, it is possible to easily find the longitudinal direction depending on whether the body or the dip tube portion precedes as in the container.

FIG. 19 is an example of a dip tube attached pump cap as a long shaped article which corresponds to the target of the article supply apparatus 100 of the embodiment. Since the body width and the dip tube thickness are largely different, it is possible to easily find the longitudinal direction depending on whether the body or the dip tube portion precedes as in the container.

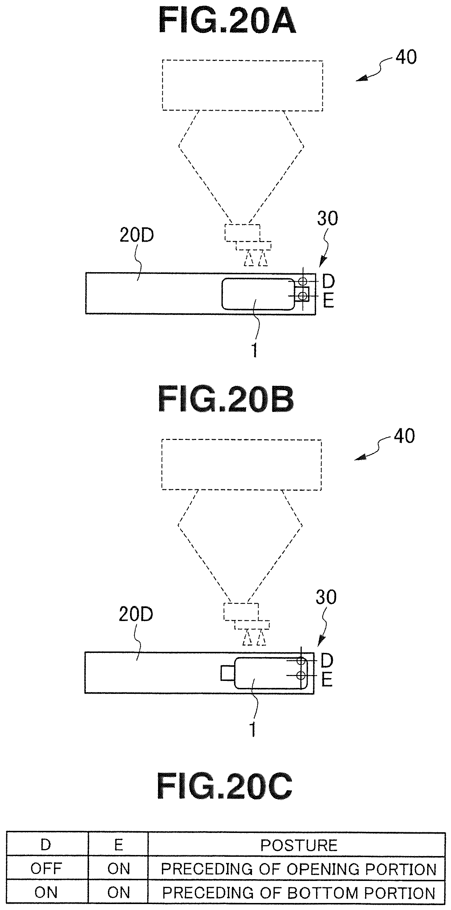

FIGs. 20A to 20C illustrate another embodiment for the longitudinal direction finding method by the finding means 30 configured as an optical sensor capable of finding the existence of the target by a dotted beam. These are views illustrating the container 1 which is at the picking position on the V-shaped conveying surface 20A in the side view, and the front V-shaped conveying surface 20A is not illustrated in the drawings so that the container 1 and the rear V-shaped conveying surface 20A are visible. Two sensors D and E are arranged in the conveying tail end (the stop position) of the container 1 in the first and second downstream-side conveying devices 20D respectively. When the V-shaped conveying surface 20A provided with the sensors D and E is said conveying guide 22, the sensors D and E are easily installed. The sensors D and E are respectively arranged at the front end of the predetermined stop range in the conveying tail end of the container 1. Then, the sensors D and E are arranged on the side in the direction perpendicular to the conveying direction of the conveying device 20 (for example, near the belt edge of the belt conveyor 21) so as not to interfere with the container 1 at the inside of the V-shaped valley in the V-shaped conveying surface 20A and to form a beam substantially horizontally. The upper sensor D is provided at a height where the sensor becomes an OFF state when the opening portion of the container 1 precedes. The lower sensor E is provided at a height where the sensor becomes an ON state when the opening portion of the container 1 precedes. As illustrated in FIG. 20A, when the sensor D is an OFF state and the sensor E is an ON state, it is found that the opening portion of the container 1 precedes. As illustrated in FIG. 20B, when the sensor D is an ON state and the sensor E is an ON state, it is found that the bottom portion of the container 1 precedes. Such an arrangement is preferable because the sensor to be moved due to the length of the container 1 is not needed. Further, since the beam does not interfere with the operation range of the robot 40 as the picking and placing device, the sensor installation position may be easily adjusted. Further, it is advantageous in cost since the number of sensors may be decreased to two.

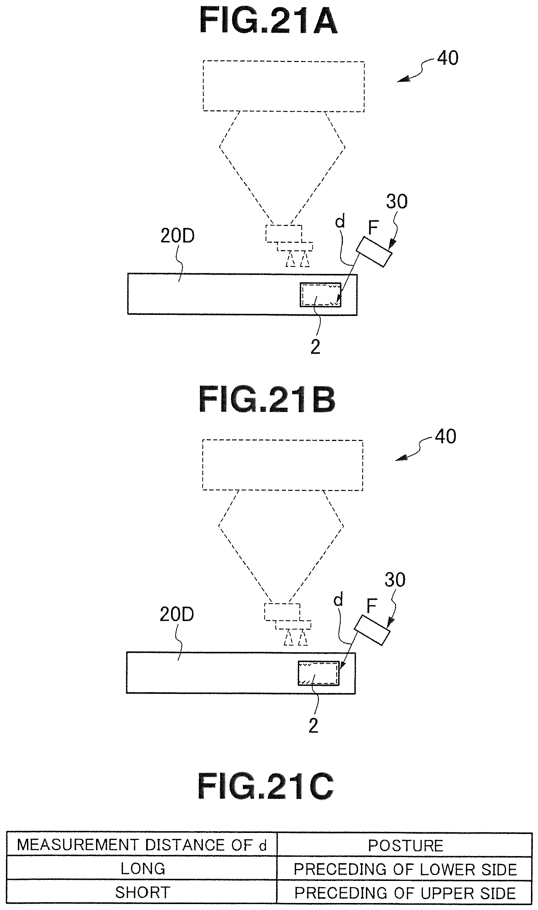

FIGS. 21A to 21C illustrate another embodiment for the longitudinal direction finding method using the finding means 30 configured as an optical distance sensor capable of measuring a distance with respect to the target by a dotted beam. The embodiment is particularly effective for finding the longitudinal direction of the article which is a concave article like the cap illustrated in FIG. 17 and an article of which the outer shape substantially does not change compared to the container. FIGS. 21A to 21C are views illustrating the cap 2 at the picking position on the V-shaped conveying surface 20A in the side view, and the front V-shaped conveying surface 20A is not illustrated in the drawings so that the cap 2 and the rear V-shaped conveying surface 20A are visible. A sensor F is arranged at the conveying tail end (the stop position) of the cap 2 in the first and second downstream-side conveying devices 20D respectively. Each sensor F is arranged above the front end of the predetermined stop range at the conveying tail end of the cap 2. Then, the sensor F is arranged so that the beam d faces the obliquely downward direction in the direction facing the conveying direction of the conveying device 20 (for example, near the belt edge of the belt conveyor 21). When the beam illustrated in FIG. 21A reaches the inside of the cap as the lower side (the container attachment side) of the cap 2, the measured distance of the beam d becomes longer than the set value, and hence it is found that the lower side (the container attachment side) of the cap 2 precedes. When the beam reaches the ceiling surface portion as the upper side of the cap 2, illustrated in FIG. 21B, the measured distance of the beam d becomes shorter than the set value, and hence it is found that the upper side (the ceiling surface portion) of the cap 2 precedes. Such an arrangement is preferable because the sensor to be moved due to the length of the cap 2 is not needed. Further, since the beam does not interfere with the operation range of the robot 40 as the picking and placing device, the sensor installation position may be easily adjusted. Further, since the number of sensors is one, the sensor may be installed in a short time. According to the finding method, it is possible to find whether the opening portion of the container 1 precedes or the bottom portion of the container 1 precedes even in the container 1 (not illustrated) of which the neck shape is not noticeably different from the shape of the other portion of the container 1.

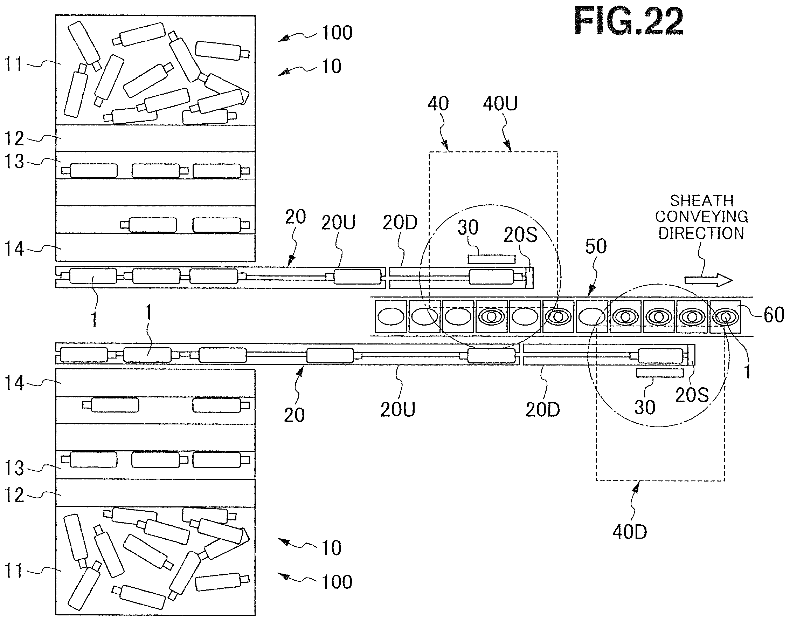

FIG. 22 illustrates another embodiment of the article supply apparatus 100. In the embodiment, the upstream-side conveying device 20U is formed in one row, and the downstream-side conveying device 20D is also formed in one row. A simple configuration is obtained due to the one-row arrangement. Further, in order to exhibit high performance, two article supply apparatuses 100 are provided, and the article supply apparatuses 100 commonly use the holder conveying device 50 and are arranged while the holder conveying device 50 is interposed symmetrically at the center therebetween. The picking and placing device 40 of each article supply apparatus 100 is arranged so that the placing position of the upstream picking and placing device 40U and the placing position of the downstream picking and placing device 40D are formed in series in the direction following the advancing direction of the holder conveying device 50. The holders 60 which are successively conveyed on the holder conveying device 50D are divided into two successive of them (the number is sum of the upstream and downstream picking and placing devices 40U and 40D). Then, the upstream holder 60 of the two holders 60 is named a first holder 60 and the downstream holder 60 thereof is named a second holder 60. The upstream picking and placing device 40U places the container 1 in the first holder 60 and the downstream picking and placing device 40D places the container 1 in the second holder 60. Since the holder conveying device 50 sends the holders 60 by two lengths corresponding to the number of the picking and placing devices 40U and 40D at a time, the containers 1 may be effectively placed in the holders 60 by the upstream and downstream picking and placing devices 40U and 40D. Further, the holders 60 may not be sent at intervals, but the containers 1 may be placed while the holders 60 are continuously sent. Using two article supply apparatuses 100 of the embodiment may make, compared to the case where one article supply apparatus 100 is used, the picking and placing ability easily improved about two times.

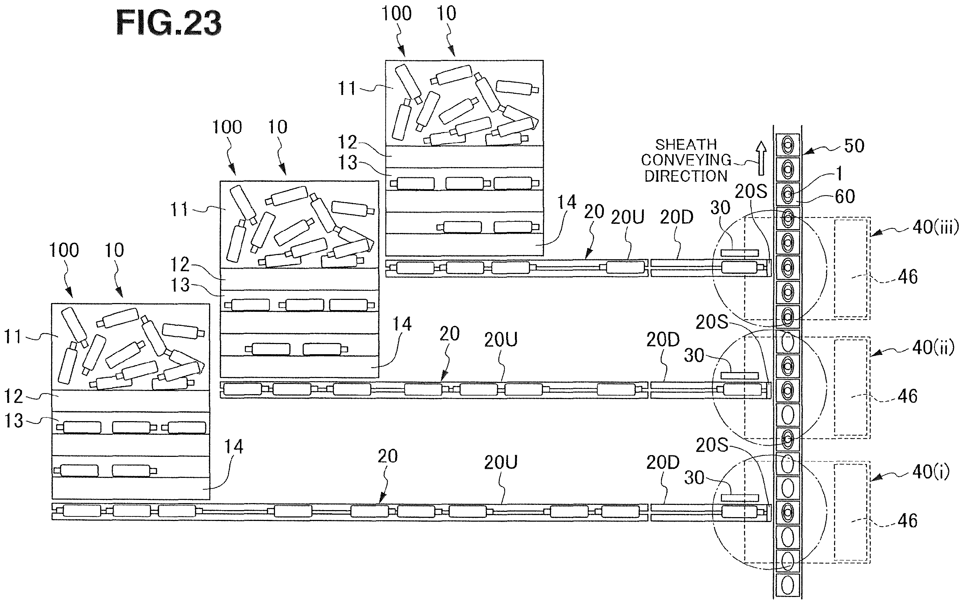

FIG. 23 illustrates another embodiment of the article supply apparatus 100. In the embodiment, three article supply apparatuses 100 are arranged in parallel in order to further exhibit high performance. The picking and placing devices 40(i) to 40(iii) of the article supply apparatuses 100 are arranged so as to face each other in the direction following the conveying direction of the downstream-side conveying device 20D of the article supply apparatus 100, and the picking and placing devices 40 are arranged so that the placing positions are formed in series in the same direction as the direction following the advancing direction of the holder conveying device 50. The holders 60 which are successively conveyed on the holder conveying device 50 are divided into three successive parts (the number of the picking and placing devices (i) to (iii)). These three holders 60 are named a first holder 60, a second holder 60, and a third holder 60 in a direction from the upstream side toward the downstream side. The picking and placing device 40(i) places the container 1 in the first holder 60, the picking and placing device 40(ii) places the container 1 in the second holder 60, and the picking and placing device 40(iii) places the container 1 in the third holder 60. Since the holder conveying device 50 sends the holder 60 at the three lengths corresponding to the number of the picking and placing devices 40(i) to 40(iii), the containers 1 may be effectively placed in the holders 60 by the picking and placing devices 40(i) to 40(iii). The holder 60 may not be sent at intervals, but the containers 1 may be placed while the holders 60 are continuously sent. In the article supply apparatus 100, the plurality of picking and placing devices 40(i) to 40(iii) may be arranged in parallel at one side of the holder conveying device 50, and the maintenance of the picking and placing devices 40 may be performed simultaneously from the same direction to improve the maintenance workability.

According to the embodiment, the following operation and effect are obtained.
(a) The conveying device 20 (the upstream-side conveying device 20U and the downstream-side conveying device 20D) places the container 1 (or the cap 2) on the V-shaped conveying surface 20A, and conveys the container 1 to the picking position in the direction in which the long shaped direction follows the V-shaped valley of the V-shaped conveying surface 20A. Accordingly, the robot 40 as the picking and placing device may sufficiently pick up the containers 1 (or the caps 2) they are located in the narrow area of the V-shaped valley of the V-shaped conveying surface 20A of the conveying device 20 and formed in one order of the longitudinal direction. Since the movement range of the robot 40 is narrow, the robot 40 may be decreased in size and the installation area thereof may be decreased. Further, the picking and placing distance of the robot 40 is also shortened. As a result, the operation time is shortened, and the ability of the robot 40 may be improved.
(b) The article observation range necessary for the finding means 30 may be confined to the narrow range of the V-shaped valley of the V-shaped conveying surface 20A where the container 1 (or the cap 2) is located in the conveying device 20. Since the finding means 30 may be decreased in size, the installation area thereof may be also decreased.
(c) The V-shaped conveying surface 20A is formed by the conveying surface 21A of the belt conveyor 21 and the conveying surface 22A of the conveying guide 22 opposed to each other in the conveying device 20, and the inclination angle formed between the conveying surface 21A of the belt conveyor 21 and the horizontal plane is gentler than the inclination angle formed between the conveying surface 22A of the conveying guide 22 and the horizontal plane. Since the inclination angle θc formed between the conveying surface 21A of the belt conveyor 21 and the horizontal plane is set to be small, the conveying force that is applied from the belt conveyor 21 to the container 1 (or the cap 2) may be increased, and the upper surface (the V-shaped conveying surface 20A) of the conveying device 20 is largely opened upward, so that the robot 40 may easily pick up the container 1 (or the cap 2).
   Since the inclination angle θg formed between the conveying surface 22A of the conveying guide 22 and the horizontal plane is set to be large, the container 1 (or the cap 2) may be further reliably pressed against the belt conveyor 21. Accordingly, the conveying device may be provided at a low cost since the conveying force applied from the belt conveyor 21 to the container 1 (or the cap 2) is large and the side of conveying guide 22 does not need to be formed as the belt conveyor.
(d) When the inclination angle of one conveying surface of the belt conveyor 21 and the conveying guide 22 with respect to the horizontal plane is set to be gentler than the inclination angle of the other conveying surface with respect to the horizontal plane, the container 1 (or the cap 2) may be stably conveyed by the belt conveyor 21 by widening the width of the gentle conveying surface.
(e) Since the picking and placing device is configured as the robot 40 having a degree of freedom of five axes or more, a certain degree or more of freedom may be ensured in the hand portion 45 that is used by the robot 40 to pick up and place the container 1 (or the cap 2).
(f) The conveying device 20 is formed by arranging the upstream-side conveying device 20U and the downstream-side conveying device 20D in series, the article providing device 10 is provided at one side of the direction perpendicular to the conveying direction of the upstream-side conveying device 20U, and the robot 40 is provided at one side of the direction perpendicular to the conveying direction of the downstream-side conveying device 20D. Since both the article providing device 10 and the robot 40 may be arranged together at the same side of the direction perpendicular to the conveying direction in the conveying device 20, the entire layout of the article supply apparatus 100 may be compact.
(g) In the upstream-side conveying device 20U, the conveying guide 22 is arranged at one side corresponding to the arrangement side of the article providing device 10, and the belt conveyor 21 is arranged at the other side. Accordingly, the container 1 (or the cap 2) that is provided from the article providing device 10 is provided to the conveying device 20 over the plate-shaped edge stopped in the conveying guide 22 so that the container 1 is not caught by the belt edge since the container 1 does not move over the belt edge of the moving belt conveyor 21, and the container 1 (or the cap 2) may be stably provided. Further, the container 1 (or the cap 2) that is provided to the conveying device 20 over the plate-shaped edge of the conveying guide 22 contacts a soften belt surface of the belt conveyor 21 opposed to the providing direction is absorbed the impact and be received by the V-shaped conveying surface 20A of the conveying device 20 without any bounce.
(h) In the downstream-side conveying device 20D, the belt conveyor 21 is arranged at one side corresponding to the arrangement side of the robot 40, and the conveying guide 22 is arranged at the other side. Since the robot 40 is arranged at side of the belt conveyor 21, the robot 40 may be installed to be near the belt conveyor 21 up to the limit in which the robot 40 may perform the picking operation, and the placing operation range of the robot 40 may be set to be large beyond the conveying guide 22.
(i) Each robot 40 has two article conveying portions as the first and second downstream-side conveying devices 20D. Since the conveying device 20 includes the plurality of independent conveying portions, the container 1 (or the cap 2) is reliably conveyed to the other conveying portion while the robot 40 picks up and places the container 1 (or the cap 2) from one conveying portion, and hence it is possible to prevent the robot 40 from waiting for the container.
(j) The conveying device 20 includes the stopping device 20S that stops the container 1 (or the cap 2) at the picking position on the V-shaped conveying surface 20A. Accordingly, it is possible to find the longitudinal direction of the container 1 by the finding means 30 configured as a cheap optical sensor (a phototube) or the like without using a positional deviation detection sensor or an expensive image processing device for the container 1. Further, the article observation area necessary for the finding means 30 may be confined to the narrow range of the V-shaped valley of the V-shaped conveying surface 20A. Accordingly, the finding means 30 may be also decreased in size, and hence the installation area thereof may be decreased. Further, since the small movement range of the robot 40 (the picking and placing device) is enough to operate, the robot 40 may be also decreased in size and the installation area thereof may be decreased. Further, the picking and placing distance for the container 1 (or the cap 2) of the robot 40 may be shortened. As a result, the operation time of the robot 40 is also shortened, and hence the ability thereof may be improved.

### [Industrial Applicability]

The present invention relates to an article supply apparatus with a picking and placing device that picks up an article as an long shaped container or a cap at a picking position and places the article at a placing position in a uniform posture, the article supply apparatus comprising: a conveying device configured to place the article provided from an article providing device onto a V-shaped conveying surface and to convey the article to the picking position in a direction in which the long shaped direction thereof follows a V-shaped valley of the V-shaped conveying surface; a stopping device configured to stop the article at the picking position on the V-shaped conveying surface; and finding means configured to find the longitudinal direction of the stopped article before the article is picked up at the picking position. The picking and placing device picks up and places the article so that the stopped article is placed at the placing position in a uniform posture according to the found result of the finding means. Accordingly, the movement range of the picking and placing device such as the robot that picks up and places the article may be narrowed.

### [Explanations of letters of numerals]

- 1: container
- 2: cap
- 10: article providing device
- 20: conveying device
- 20A: V-shaped conveying surface
- 20U: upstream-side conveying device
- 20D: downstream-side conveying device
- 20S: stopping device
- 21: belt conveyor
- 21A: conveying surface
- 22: conveying guide
- 22A: conveying surface
- 30: finding means
- 40: robot (picking and placing device)
- 50: holder conveying device
- 60: holder
- 100: article supply apparatus

## Claims

1. An article supply apparatus (100) with a picking and placing device (40) that picks up an article as a long shaped container (1) or a long shaped cap (2) at a picking position and places the article (1, 2) at a placing position in a uniform posture, the article supply apparatus comprising:
a conveying device (20) configured to place the article provided from an article providing device (10) onto a V-shaped conveying surface and to convey the article to the picking position in a direction in which the long shaped direction thereof follows a V-shaped valley of the V-shaped conveying surface (20A),
a stopping device (20S) formed as an open-close or normally-closed stopper and configured to stop the article while contacting the article at the picking position on the V-shaped conveying surface (20A) finding means (30) configured to find the longitudinal direction of the stopped article before the article is picked up at the picking position,
wherein the picking and placing device (40) picks up and places the article (1, 2) according to the found result of the finding means (30) to place the stopped article (1, 2) at the placing position in a uniform posture, the article supply apparatus (100) further comprising a holder conveying device (50),
wherein the picking and placing device (40) is configured to directly place the picked article in a holder (60) on the holder conveying device (50) in a standing posture.

2. The article supply apparatus (100) according to claim 1,
wherein the conveying device (20) forms the V-shaped conveying surface (20A) by conveying surfaces of opposed belt conveyors (21).

3. The article supply apparatus (100) according to claim 1,
wherein the conveying device (20) forms the V-shaped conveying surface (20A) by conveying surfaces of a belt conveyor (21) and a conveying guide (22) opposed to each other.

4. The article supply apparatus (100) according to claim 3,
wherein the conveying device (20) forms the V-shaped conveying surface (20A) by conveying surfaces of a belt conveyor (21) and a conveying guide (22) opposed to each other, and an inclination formed between the conveying surface of the belt conveyor and a horizontal plane is gentler than an inclination formed between the conveying surface of the conveying guide and a horizontal plane.

5. The article supply apparatus (100) according to claim 3,
wherein the conveying device (20) forms the V-shaped conveying surface (20A) by conveying surfaces of a belt conveyor (21) and a conveying guide (22) opposed to each other, and when an inclination angle of one conveying surface with respect to a horizontal plane is gentler than an inclination angle of the other conveying surface with respect to a horizontal plane, the width of the gentle conveying surface is widened.

6. The article supply apparatus (100) according to any one of claims 1 to 5,
wherein the picking and placing device (40) is configured as a robot having a degree of freedom of five axes or more.

7. The article supply apparatus (100) according to claim 6 comprising the article providing device (10),
wherein the conveying device (20) is formed by arranging an upstream-side conveying device (20U) and a downstream-side conveying device (20D) in series, and
wherein the article providing device (10) is provided at one side of a direction perpendicular to the conveying direction of the upstream-side conveying device, and the robot (40) is provided at the same side as that of the article providing device of the downstream-side conveying device.

8. The article supply apparatus (100) according to claim 6 or 7,
wherein the conveying device (20) includes a plurality of conveying portions that are independent from each other with respect to one robot and convey the article.

9. The article supply apparatus (100) according to claim 7,
wherein each of the upstream-side conveying device (20U) and the downstream-side conveying device (20D) forms the V-shaped conveying surface (20A) by the conveying surfaces of the belt conveyor (21) and the conveying guide (22) opposed to each other, and
wherein the upstream-side conveying device (20U) is formed so that the conveying guide is arranged at one of right and left sides of the conveying direction, and the downstream-side conveying device (20D) is formed so that the belt conveyor is arranged at the same side as that at which the conveying guide of the upstream-side conveying device is arranged.

10. The article supply apparatus (100) according to claim 3 comprising the article providing device (10),
wherein the article providing device (10) is provided near the conveying guide (22).

11. The article supply apparatus (100) according to claim 3,
wherein the picking and placing device (40) is provided near the belt conveyor (21).

12. The article supply apparatus (100) according to claim 7,
wherein the article providing device (10) provided at one side of the upstream-side conveying device is provided near the conveying guide.

13. The article supply apparatus (100) according to claim 7,
wherein the picking and placing device (40) provided at the same side as that of the article providing device of the downstream-side conveying device (20D) is provided near the belt conveyor (21).

14. The article supply apparatus (100) according to claim 9,
wherein the article providing device (40) provided at one side of the upstream-side conveying device is provided near the conveying guide, and the picking and placing device (40) provided at the same side as that of the article providing device of the downstream-side conveying device is provided near the belt conveyor.

15. The article supply apparatus (100) according to claim 7,
wherein the upstream-side conveying device is operated intermittently or operated while the speed thereof increases and decreases in response to an article stock amount.

16. The article supply apparatus (100) according to claim 7,
wherein the upstream-side conveying device (20U) is continuously operated, and a stopper for stopping the conveyed article is provided between the upstream-side conveying device (20U) and the downstream-side conveying device (20D).

## Patentansprüche

1. Artikelzufuhreinrichtung (100) mit einer Kommissioniervorrichtung (40), die einen Artikel als einen länglichen Behälter (1) oder eine längliche Kappe (2) an einer Aufnahmeposition aufnimmt und den Artikel (1, 2) an einer Ablageposition in einer gleichförmigen Lage ablegt, die Artikelzufuhreinrichtung umfassend:
eine Beförderungsvorrichtung (20), die konfiguriert ist, den von einer Artikelbereitstellungsvorrichtung (10) bereitgestellten Artikel auf einer V-förmigen Beförderungsfläche abzulegen, und den Artikel zu der Aufnahmeposition in einer Richtung zu befördern, in der dessen längliche Richtung einem V-förmigen Tal der V-förmigen Beförderungsfläche (20A) folgt;
eine Stoppvorrichtung (20S), die als ein offener-geschlossener oder normalerweise geschlossener Anschlag gebildet ist und konfiguriert ist, den Artikel zu stoppen, während sie mit dem Artikel an der Aufnahmeposition auf der V-förmigen Beförderungsfläche (20A) in Kontakt ist
Ermittlungsmittel (30), die konfiguriert sind, die Längsrichtung des gestoppten Artikels zu ermitteln, bevor der Artikel an der Aufnahmeposition aufgenommen wird,
wobei die Kommissioniervorrichtung (40) den Artikel (1, 2) gemäß dem ermittelten Ergebnis des Ermittlungsmittels (30) kommissioniert, um den gestoppten Artikel (1, 2) an der Ablageposition in einer gleichförmigen Lage abzulegen.
wobei die Artikelzufuhreinrichtung (100) weiter eine Halterungsbeförderungsvorrichtung (50) umfasst,
wobei die Kommissioniervorrichtung (40) konfiguriert ist, den aufgenommenen Artikel direkt in einer Halterung (60) auf der Halterungsbeförderungsvorrichtung (50) in einer aufrechten Lage abzulegen.

2. Artikelzufuhreinrichtung (100) nach Anspruch 1,
wobei die Beförderungsvorrichtung (20) die V-förmige Beförderungsfläche (20A) durch Beförderungsflächen gegenüberliegender Bandförderer (21) bildet.

3. Artikelzufuhreinrichtung (100) nach Anspruch 1,
wobei die Beförderungsvorrichtung (20) die V-förmige Beförderungsfläche (20A) durch Beförderungsflächen eines Bandförderers (21) und einer Beförderungsführung (22) bildet, die einander gegenüberliegen.

4. Artikelzufuhreinrichtung (100) nach Anspruch 3,
wobei die Beförderungsvorrichtung (20) die V-förmige Beförderungsfläche (20A) durch Beförderungsflächen eines Bandförderers (21) und einer Beförderungsführung (22) bildet, die einander gegenüberliegen, und eine Neigung, die zwischen der Beförderungsfläche des Bandförderers und einer horizontalen ebene gebildet ist, sanfter ist als eine Neigung, die zwischen der Beförderungsfläche der Beförderungsführung und einer horizontalen Ebene gebildet ist.

5. Artikelzufuhreinrichtung (100) nach Anspruch 3,
wobei die Beförderungsvorrichtung (20) die V-förmige Beförderungsfläche (20A) durch Beförderungsflächen eines Bandförderers (21) und einer Beförderungsführung (22) bildet, die einander gegenüberliegen, und wobei, wenn ein Neigungswinkel einer Beförderungsfläche in Bezug auf eine horizontale Ebene sanfter ist als ein Neigungswinkel der anderen Beförderungsfläche in Bezug auf eine horizontale Ebene, die Breite der sanften Beförderungsfläche verbreitert ist.

6. Artikelzufuhreinrichtung (100) nach einem der Ansprüche 1 bis 5,
wobei die Kommissioniervorrichtung (40) als ein Roboter konfiguriert ist, der einen Freiheitsgrad von fünf Achsen oder mehr aufweist.

7. Artikelzufuhreinrichtung (100) nach Anspruch 6, umfassend die Artikelbereitstellungsvorrichtung (10),
wobei die Beförderungsvorrichtung (20) durch Anordnen einer stromaufwärts liegenden Beförderungsvorrichtung (20U) und einer stromabwärts liegenden Beförderungsvorrichtung (20D) in Reihe gebildet ist und
wobei die Artikelbereitstellungsvorrichtung (10) an einer Seite einer Richtung senkrecht zu der Beförderungsrichtung der stromaufwärts liegenden Beförderungsvorrichtung bereitgestellt ist und der Roboter (40) an derselben Seite wie die Artikelbereitstellungsvorrichtung der stromabwärts liegenden Beförderungsvorrichtung bereitgestellt ist.

8. Artikelzufuhreinrichtung (100) nach Anspruch 6 oder 7,
wobei die Beförderungsvorrichtung (20) eine Vielzahl von Beförderungsabschnitten beinhaltet, die unabhängig voneinander in Bezug auf einen Roboter sind und den Artikel befördern.

9. Artikelzufuhreinrichtung (100) nach Anspruch 7,
wobei jede der stromaufwärts liegenden Beförderungsvorrichtung (20U) und der stromabwärts liegenden Beförderungsvorrichtung (20D) die V-förmige Beförderungsfläche (20A) durch die Beförderungsflächen des Bandförderers (21) und der Beförderungsführung (22) bildet, die einander gegenüberliegen, und
wobei die stromaufwärts liegende Beförderungsvorrichtung (20U) so gebildet ist, dass die Beförderungsführung an einer von einer rechten und linken Seite der Beförderungsrichtung angeordnet ist, und die stromabwärts liegende Beförderungsvorrichtung (20D) so gebildet ist, dass der Bandförderer an derselben Seite wie jener angeordnet ist, an der die Beförderungsführung der stromaufwärts liegenden Beförderungsvorrichtung angeordnet ist.

10. Artikelzufuhreinrichtung (100) nach Anspruch 3, die die Artikelbereitstellungsvorrichtung (10) umfasst,
wobei die Artikelbereitstellungsvorrichtung (10) nahe der Beförderungsführung (22) bereitgestellt ist.

11. Artikelzufuhreinrichtung (100) nach Anspruch 3,
wobei die Kommissioniervorrichtung (40) nahe dem Bandförderer (21) bereitgestellt ist.

12. Artikelzufuhreinrichtung (100) nach Anspruch 7,
wobei die Artikelbereitstellungsvorrichtung (10), die an einer Seite der stromaufwärts liegenden Beförderungsvorrichtung bereitgestellt ist, nahe der Beförderungsführung bereitgestellt ist.

13. Artikelzufuhreinrichtung (100) nach Anspruch 7,
wobei die Kommissioniervorrichtung (40), die an derselben Seite wie die Artikelbereitstellungsvorrichtung der stromabwärts liegenden Beförderungsvorrichtung (20D) bereitgestellt ist, nahe dem Bandförderer (21) bereitgestellt ist.

14. Artikelzufuhreinrichtung (100) nach Anspruch 9,
wobei die Artikelbereitstellungsvorrichtung (40), die an einer Seite der stromaufwärts liegenden Beförderungsvorrichtung bereitgestellt ist, nahe der Beförderungsführung bereitgestellt ist und die Kommissioniervorrichtung (40), die an derselben Seite wie die Artikelbereitstellungsvorrichtung der stromabwärts liegenden Beförderungsvorrichtung bereitgestellt ist, nahe dem Bandförderer bereitgestellt ist.

15. Artikelzufuhreinrichtung (100) nach Anspruch 7,
wobei die stromaufwärts liegende Beförderungsvorrichtung schrittweise betrieben wird oder betrieben wird, während ihre Geschwindigkeit in Reaktion auf eine Artikelvorratsmenge zunimmt und abnimmt.

16. Artikelzufuhreinrichtung (100) nach Anspruch 7,
wobei die stromaufwärts liegende Beförderungsvorrichtung (20U) kontinuierlich betrieben wird und ein Anschlag zum Stoppen des beförderten Artikels zwischen der stromaufwärts liegenden Beförderungsvorrichtung (20U) und der stromabwärts liegenden Beförderungsvorrichtung (20D) bereitgestellt ist.

## Revendications

1. Appareil de distribution d'articles (100) pourvu d'un dispositif de saisie et de placement (40) qui saisit un article tel qu'un récipient de forme longue (1) ou un capuchon de forme longue (2) dans une position de saisie et place l'article (1, 2) dans une position de placement dans une posture uniforme, l'appareil de distribution d'articles comprenant :
un dispositif de transport (20) configuré pour placer l'article provenant d'un dispositif de fourniture d'articles (10) sur un surface de transport en forme de V et pour transporter l'article jusqu'à la position de saisie dans une direction dans laquelle la direction de forme longue de celui-ci suit une vallée en forme de V de la surface de transport en forme de V (20A),
un dispositif d'arrêt (20S) formé en tant que butée ouverte-fermée ou normalement fermée et configuré pour arrêter l'article tandis qu'il entre en contact avec l'article dans la position de saisie sur la surface de transport en forme de V (20A)
un moyen de découverte (30) configuré pour trouver la direction longitudinale de l'article arrêté avant que l'article ne soit saisi dans la position de saisie,
dans lequel le dispositif de saisie et de placement (40) saisit et place l'article (1, 2) en fonction du résultat trouvé du moyen de découverte (30) pour placer l'article arrêté (1, 2) dans la position de placement dans une posture uniforme,
l'appareil de distribution d'articles (100) comprenant en outre un dispositif de transport de support (50),
dans lequel le dispositif de saisie et de placement (40) est configuré pour placer directement l'article saisi dans un support (60) sur le dispositif de transport de support (50) dans une posture debout.

2. Appareil de distribution d'articles (100) selon la revendication 1,
dans lequel le dispositif de transport (20) forme la surface de transport en forme de V (20A) par des surfaces de transport de transporteurs à bande (21).

3. Appareil de distribution d'articles (100) selon la revendication 1,
dans lequel le dispositif de transport (20) forme la surface de transport en forme de V (20A) par des surfaces de transport d'un transporteur à bande (21) et d'un guide de transport (22) mutuellement opposées.

4. Appareil de distribution d'articles (100) selon la revendication 3,
dans lequel le dispositif de transport (20) forme la surface de transport en forme de V (20A) par des surfaces de transport d'un transporteur à bande (21) et d'un guide de transport (22) mutuellement opposées, et une inclinaison formée entre la surface de transport du transporteur à bande et un plan horizontal est plus légère qu'une inclinaison formée entre la surface de transport du guide de transport et un plan horizontal.

5. Appareil de distribution d'articles (100) selon la revendication 3,
dans lequel le dispositif de transport (20) forme la surface de transport en forme de V (20A) par des surfaces de transport d'un transporteur à bande (21) et d'un guide de transport (22) mutuellement opposées, et lorsqu'un angle d'inclinaison d'une surface de transport par rapport à un plan horizontal est plus léger qu'un angle d'inclinaison de l'autre surface de transport par rapport à un plan horizontal, la largeur de la surface de transport légère est élargie.

6. Appareil de distribution d'articles (100) selon l'une quelconque des revendications 1 à 5,
dans lequel le dispositif de saisie et de placement (40) est configuré comme un robot présentant un degré de liberté de cinq axes ou plus.

7. Appareil de distribution d'articles (100) selon la revendication 6 comprenant le dispositif de fourniture d'articles (10),
dans lequel le dispositif de transport (20) est formé en agençant un dispositif de transport côté amont (20U) et un dispositif de transport côté aval (20D) en série, et
dans lequel le dispositif de fourniture d'articles (10) est situé d'un côté d'une direction perpendiculaire à la direction de transport du dispositif de transport côté amont, et le robot (40) est situé du même côté que celui du dispositif de distribution d'articles du dispositif de transport coté aval.

8. Appareil de distribution d'articles (100) selon la revendication 6 ou 7,
dans lequel le dispositif de transport (20) inclut une pluralité de parties de transport qui sont indépendantes les unes des autres par rapport à un robot et transportent l'article.

9. Appareil de distribution d'articles (100) selon la revendication 7,
dans lequel chacun du dispositif de transport côté amont (20U) et du dispositif de transport côté aval (20D) forment la surface de transport en forme de V (20A) par les surfaces de transport du transporteur à bande (21) et du guide de transport (22) opposées entre elles, et
dans lequel le dispositif de transport côté amont (20U) est formé de telle sorte que le guide de transport est agencé au niveau de l'un des côtés droit et gauche de la direction de transport, et le dispositif de transport côté aval (20D) est formé de telle sorte que le transporteur à bande est agencé du même côté que celui au niveau duquel le guide de transport du dispositif de transport côté amont est agencé.

10. Appareil de distribution d'articles (100) selon la revendication 3 comprenant le dispositif de fourniture d'articles (10),
dans lequel le dispositif de fourniture d'articles (10) est situé près du guide de transport (22).

11. Appareil de distribution d'articles (100) selon la revendication 3,
dans lequel le dispositif de saisie et de placement (40) est situé près du transporteur à bande (21).

12. Appareil de distribution d'articles (100) selon la revendication 7,
dans lequel le dispositif de fourniture d'articles (10) situé d'un côté du dispositif de transport côté amont est situé près du guide de transport.

13. Appareil de distribution d'articles (100) selon la revendication 7,
dans lequel le dispositif de saisie et de placement (40) situé du même côté que celui du dispositif de fourniture d'articles du dispositif de transport côté aval (20D) est situé près du transporteur à bande (21).

14. Appareil de distribution d'articles (100) selon la revendication 9,
dans lequel le dispositif de fourniture d'articles (40) situé d'un côté du dispositif de transport côté amont est situé près du guide de transport, et le dispositif de saisie et de placement (40) situé du même côté que celui du dispositif de fourniture d'articles du dispositif de transport côté aval est situé près du transporteur à bande.

15. Appareil de distribution d'articles (100) selon la revendication 7,
dans lequel le dispositif de transport côté amont est actionné par intermittence ou actionné alors que la vitesse de celui-ci augmente et diminue en réponse à une quantité de stock d'articles.

16. Appareil de distribution d'articles (100) selon la revendication 7,
dans lequel le dispositif de transport côté amont (20U) est actionné en continu, et une butée pour arrêter l'article transporté est située entre le dispositif de transport côté amont (20U) et le dispositif de transport côté aval (20D).
